(19) Europäisches Patentamt / European Patent Office / Office européen des brevets

(11) **EP 4 614 407 A1**

(12) **EUROPEAN PATENT APPLICATION**
published in accordance with Art. 153(4) EPC

(43) Date of publication:
**10.09.2025 Bulletin 2025/37**

(21) Application number: **23884984.8**

(22) Date of filing: **01.11.2023**

(51) International Patent Classification (IPC):
**G06N 20/20** (2019.01)   **G06N 3/08** (2023.01)

(52) Cooperative Patent Classification (CPC):
**G06N 3/04; G06N 3/08; G06N 20/20**

(86) International application number:
**PCT/CN2023/129042**

(87) International publication number:
**WO 2024/094058 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.11.2022 CN 202211372502**

(71) Applicant: **Huawei Technologies Co., Ltd.
Shenzhen, Guangdong 518129 (CN)**

(72) Inventors:
• **ZHANG, Qi
  Shenzhen, Guangdong 518129 (CN)**

• **PAN, Shaowu
  Shenzhen, Guangdong 518129 (CN)**
• **WU, Tiancheng
  Shenzhen, Guangdong 518129 (CN)**
• **ZHANG, Zhaoju
  Shenzhen, Guangdong 518129 (CN)**
• **LIU, Lu
  Shenzhen, Guangdong 518129 (CN)**

(74) Representative: **Maiwald GmbH
Engineering
Elisenhof
Elisenstrasse 3
80335 München (DE)**

(54) **MODEL TRAINING METHOD AND RELATED APPARATUS**

(57)     A model training method is provided, applied to the field of artificial intelligence technologies. **In** the method, a plurality of pieces of data in a training process are divided into a plurality of groups of data, and a data amount of each group of data is related to a communication capability of a training apparatus. The training apparatus processes the plurality of groups of data in batches based on a model, and transmits a plurality of parts of data obtained by processing the plurality of groups of data to another training apparatus in batches, to train the model. **In** this way, when transmitting data obtained by processing data in a previous group number to the another training apparatus, the training apparatus can still continue to process data in a subsequent group number, so that model training time is hidden in time for communication between training apparatuses. This finally shortens idle waiting duration in an entire iterative training process, and improves overall training efficiency.

FIG. 3

**Description**

This application claims priority to Chinese Patent Application No. 202211372502.8, filed with the China National Intellectual Property Administration on November 3, 2022, and entitled "MODEL TRAINING METHOD AND RELATED APPARATUS", which is incorporated herein by reference in its entirety.

## TECHNICAL FIELD

This application relates to the field of artificial intelligence (Artificial Intelligence, AI) technologies, and in particular, to a model training method and a related apparatus.

## BACKGROUND

As a digitalization process of human society accelerates, a large amount of data is generated. Machine learning technologies can be used to automatically mine information hidden in data. Therefore, machine learning models trained based on a large amount of data have been used in various scenarios, such as facial recognition, voice translation, and medical assistant diagnosis. During actual application, accuracy, a generalization capability, and the like of the machine learning model are critical, and all these depend on training of the machine learning model by using the large amount of data.

Due to constraints on data privacy security, such as laws and regulations, business secrets, and personal privacy, a plurality of data source parties often cannot directly exchange data. As a result, data from the plurality of data source parties cannot be integrated to train a machine learning model, which restricts further improvement of a capability of the machine learning model. Birth of federated learning is to resolve this problem.

Federated learning (Federated Learning) is a distributed machine learning technology. A core idea of federated learning is to perform distributed model training among the plurality of data source parties that have local data, and build a global model based on integrated data in a manner of only exchanging intermediate results without exchanging the local data. In this way, a balance between data privacy protection and data sharing computing is achieved.

However, because a plurality of devices participating in federated learning are distributed in different places, in a process of performing federated learning, the plurality of devices usually need to exchange a large amount of data via a network. Due to a limited communication capability of the network, when there is a large amount of data to be exchanged between the plurality of devices, communication duration for exchanging data between the devices is usually greater than duration for training a model by the device. Consequently, an overall delay of federated learning is long.

## SUMMARY

This application provides a model training method, to shorten idle waiting duration in an entire iterative training process, and improve overall training efficiency.

A first aspect of this application provides a model training method, applied to the field of artificial intelligence technologies. The method includes: A first training apparatus obtains a training dataset. The training dataset includes a plurality of pieces of data. The plurality of pieces of data obtained by the first training apparatus may be data of one batch. That is, a quantity of the plurality of pieces of data is the same as a batch size of a model. The batch size indicates a data amount of data samples used to train the model at the same time, namely, a data amount of data samples that need to be used in one iterative training process of the model.

Then, the first training apparatus divides the plurality of pieces of data into a plurality of groups of data. Each of the plurality of groups of data includes at least one piece of data, and a data amount of each group of data is related to a communication capability of the first training apparatus. For example, the data amount of each group of data is in a positive correlation with the communication capability of the first training apparatus. That is, a stronger communication capability of the first training apparatus indicates a larger data amount of each group of data.

Finally, the plurality of groups of data are processed in batches by group based on the model deployed in the first training apparatus, to train the model and transmit data obtained by processing the plurality of groups of data to a second training apparatus in batches. The second training apparatus and the first training apparatus jointly participate in training of the model. Specifically, the plurality of groups of data are processed based on the model to obtain a plurality of parts of data, and each group of data corresponds to a unique part of data. In addition, because the plurality of groups of data are processed in batches in this step, each of the plurality of parts of data in this step is also transmitted to the second training apparatus in batches.

In this solution, a plurality of pieces of data in a training process are divided into a plurality of groups of data, and a data amount of each group of data is related to a communication capability of a training apparatus. The training apparatus processes the plurality of groups of data in batches based on a model, and transmits a plurality of parts of data obtained by processing the plurality of groups of data to another training apparatus in batches, to train the model. In this way, when transmitting data obtained by processing data in a previous group number to the another training apparatus, the training apparatus can still continue to process data in a subsequent group number, so that model training time is hidden in time for communication between training apparatuses. This finally shortens idle waiting duration in an entire iterative training process, and improves overall training efficiency.

In a possible implementation, an operation executed in the process of training the model includes a first-type operation and a second-type operation. The first-type operation is used to generate, based on the plurality of groups of data, the plurality of parts of data to be transmitted to the second training apparatus. That is, the first-type operation is an operation that depends on the plurality of groups of data to generate the to-be-transmitted data. The second-type operation is used to generate data processed only by the first training apparatus. That is, whether the second-type operation is executed does not affect generation of the to-be-transmitted data.

In addition, an execution priority of the first-type operation is higher than an execution priority of the second-type operation. In other words, in the training process, when both the first-type operation and the second-type operation that can be executed exist, the first training apparatus preferentially executes the first-type operation. After all first-type operations are executed, the first training apparatus executes the second-type operation.

In this solution, for the first-type operation that affects generation of the to-be-transmitted data and the second-type operation that does not affect generation of the to-be-transmitted data, the training apparatus preferentially executes the first-type operation, so that the to-be-transmitted data can be continuously generated, to prevent the training apparatus from being in a communication idle state as much as possible, and ensure that time for parallel communication and training is as long as possible. This shortens idle waiting duration in an entire iterative process, and improves overall training efficiency.

In a possible implementation, the first-type operation includes a first-subtype operation and a second-subtype operation, an operation result of the first-subtype operation is used to obtain an input of the second-subtype operation, and an operation result of the second-subtype operation is used to be transmitted to the second training apparatus. In other words, the operation result obtained by the first training apparatus by executing the second-subtype operation is the data that needs to be transmitted to the second training apparatus, and the operation result obtained by the first training apparatus by executing the first-subtype operation is used as the input of the second-subtype operation. That is, execution of the second-subtype operation depends on the first-subtype operation. In the actual training process, only after the first-subtype operation is first executed, data that is used as the input of the second-subtype operation can be obtained, and then the second-subtype operation can be executed.

In a possible implementation, an execution priority of the second-subtype operation is higher than an execution priority of the first-subtype operation.

In simple terms, execution of the second-subtype operation depends on the first-subtype operation. Therefore, in the training process, the first training apparatus needs to first execute the first-subtype operation and obtain the operation result, and then can continue to execute the second-subtype operation based on the obtained operation result. That is, the second-subtype operation can be executed only after an operation condition of the second-subtype operation is met. However, after the operation condition of the second-subtype operation is met, the first training apparatus preferentially executes the second-subtype operation, to generate the data to be transmitted to the second training apparatus as soon as possible.

In a possible implementation, in the model training process, the first training apparatus caches, into a first queue, the data generated by executing the first-type operation, where the first queue is used to cache the data to be transmitted to the second training apparatus. When a data amount of the data in the first queue is greater than or equal to a first threshold, the first training apparatus stops execution of the first-type operation, and executes the second-type operation.

Specifically, when there is a large amount of data in the first queue, it indicates that a speed at which the first training apparatus sends data to the second training apparatus is far slower than a speed at which the first training apparatus generates data by executing the first-type operation. Therefore, the first training apparatus continuing to preferentially execute the first-type operation does not improve overall training efficiency. In this case, to avoid excessive memory overheads, the first training apparatus may opt to switch to execute the second-type operation, thereby preventing accumulation of excessively generated to-be-transmitted data in a memory.

In a possible implementation, when the data in the first queue is less than the first threshold, or when data used to support execution of the second-type operation has been processed, the first training apparatus stops executing the second-type operation, and continues to execute the first-type operation. The data used to support execution of the second-type operation may be data that is used as an input of the second-type operation, namely, input data of the second-type operation.

In other words, when the data in the first queue is consumed to a specific amount, to avoid a phenomenon that communication is idle because the data in the first queue is exhausted, the first training apparatus may continue to preferentially execute the first-type operation, to continuously generate the data to be transmitted to the second training apparatus, thereby ensuring continuity of data communication. In addition, after the first training apparatus processes the input data of the second-type operation, the data used to support execution of the second-type operation has been processed, and the first training apparatus cannot continue to execute the second-type operation. Therefore, the first training apparatus switches to continue to execute the first-type operation.

In a possible implementation, training in which the first training apparatus participates is federated learning, for example, horizontal federated learning, vertical federated learning, or federated transfer learning.

In a possible implementation, the first-type operation includes an operation of processing the plurality of groups of data based on the model, and the second-type operation includes an operation of performing reverse gradient calculation on the model based on data obtained from the second training apparatus.

In a possible implementation, the model includes a first submodel and a second submodel. The first-type operation includes an operation of processing the plurality of groups of data based on the first submodel, and an operation of processing the second submodel based on data obtained from the second training apparatus. The second-type operation includes an operation of performing reverse gradient calculation on the first submodel.

In a possible implementation, the quantity of the plurality of pieces of data is related to the batch size of the model. In the process of training the model, a target gradient is related to a plurality of gradients obtained based on the plurality of groups of data, and the target gradient is used by the first training apparatus to update the model. For example, when the plurality of gradients are separately obtained based on the plurality of groups of data, the target gradient is obtained by calculating an average value of the plurality of gradients.

In this solution, the target gradient is obtained based on the plurality of gradients, and the model is updated based on the target gradient. This can ensure that the model is updated based on data of one batch, and ensure that accuracy of model training is not affected.

In a possible implementation, the quantity of the plurality of pieces of data is related to the batch size of the model, a quantity of groups of the plurality of groups of data is in a positive correlation with a to-be-transmitted data amount, and the quantity of groups of the plurality of groups of data is in a negative correlation with the communication capability and training duration of the first training apparatus. The to-be-transmitted data amount is a data amount of to-be-transmitted data generated after the plurality of groups of data are processed, and the training duration is duration for training the model by the first training apparatus based on the plurality of groups of data.

In other words, a larger data amount of the to-be-transmitted data generated after the plurality of groups of data are processed indicates a larger quantity of groups of the plurality of groups of data, to reduce to-be-transmitted data generated after each group of data is processed, and avoid an excessively large data amount of the to-be-transmitted data generated after each group of data is processed. In addition, a stronger communication capability of the first training apparatus indicates more data that can be transmitted by the first training apparatus to the second training apparatus in a unit time, and indicates that a smaller quantity of groups of the plurality of groups of data may be obtained through division. Longer duration for training the model by the first training apparatus based on the plurality of groups of data indicates a slower speed at which the first training apparatus generates the to-be-transmitted data by processing the plurality of groups of data, and indicates that a smaller quantity of groups of the plurality of groups of data may be obtained through division.

A second aspect of this application provides a model training apparatus. The model training apparatus is a first training apparatus, and includes:

an obtaining module, configured to obtain a training dataset, where the training dataset includes a plurality of pieces of data; and

a processing module, configured to divide the plurality of pieces of data into a plurality of groups of data, where each of the plurality of groups of data includes at least one piece of data, and a data amount of each group of data is related to a communication capability of the first training apparatus.

The processing module is further configured to process the plurality of groups of data in batches by group based on a model deployed in the first training apparatus, to train the model and transmit data obtained by processing the plurality of groups of data to a second training apparatus in batches. The second training apparatus and the first training apparatus jointly participate in training of the model.

In a possible implementation, an operation executed in a process of training the model includes a first-type operation and a second-type operation, the first-type operation is used to generate, based on the plurality of groups of data, data to be transmitted to the second training apparatus, the second-type operation is used to generate data processed only by the first training apparatus, and an execution priority of the first-type operation is higher than an execution priority of the second-type operation.

In a possible implementation, the first-type operation includes a first-subtype operation and a second-subtype operation, an operation result of the first-subtype operation is used to obtain an input of the second-subtype operation, and an operation result of the second-subtype operation is used to be transmitted to the second training apparatus.

In a possible implementation, an execution priority of the second-subtype operation is higher than an execution priority of the first-subtype operation.

In a possible implementation, the processing module is further configured to:

cache, into a first queue, the data generated by executing the first-type operation, where the first queue is used to cache the data to be transmitted to the second training apparatus; and
when a data amount of the data in the first queue is greater than or equal to a first threshold, stop execution of the first-type operation, and execute the second-type operation.

In a possible implementation, the processing module is further configured to:

when the data in the first queue is less than the first threshold, or when data used to support execution of the second-type operation has been processed, stop executing the second-type operation, and continue to execute the first-type operation.

In a possible implementation, training in which the first training apparatus participates is federated learning.

In a possible implementation, the first-type operation includes an operation of processing the plurality of groups of data based on the model, and the second-type operation includes an operation of performing reverse gradient calculation on the model based on data obtained from the second training apparatus.

In a possible implementation, the model includes a first submodel and a second submodel.

The first-type operation includes an operation of processing the plurality of groups of data based on the first submodel, and an operation of processing the second submodel based on data obtained from the second training apparatus.

The second-type operation includes an operation of performing reverse gradient calculation on the first submodel.

In a possible implementation, a quantity of the plurality of pieces of data is related to a batch size of the model.

In the process of training the model, a target gradient is related to a plurality of gradients obtained based on the plurality of groups of data, and the target gradient is used by the first training apparatus to update the model.

In a possible implementation, the quantity of the plurality of pieces of data is related to the batch size of the model, a quantity of groups of the plurality of groups of data is in a positive correlation with a to-be-transmitted data amount, and the quantity of groups of the plurality of groups of data is in a negative correlation with the communication capability and training duration of the first training apparatus.

The to-be-transmitted data amount is a data amount of to-be-transmitted data generated after the plurality of groups of data are processed, and the training duration is duration for training the model by the first training apparatus based on the plurality of groups of data.

A third aspect of this application provides a model training apparatus. The apparatus may include a processor, the processor is coupled to a memory, and the memory stores program instructions. When the program instructions stored in the memory are executed by the processor, the method according to any one of the first aspect or the implementations of the first aspect is implemented. For steps performed by the processor in the possible implementations of the first aspect, refer to the first aspect. Details are not described herein again.

In a possible implementation, the model training apparatus further includes a communication interface. Through the communication interface, the model training apparatus transmits data to another model training apparatus, or receives data transmitted by another model training apparatus. Specifically, the model training apparatus may transmit the data to the another model training apparatus through the communication interface by using a remote direct memory access (Remote Direct Memory Access, RDMA) technology. A specific manner of transmitting data between model training apparatuses is not limited herein.

The RDMA means that data is directly transferred to a storage area of a computer through a network, that is, the data is quickly moved from a system to a remote system memory without causing any impact on an operating system. In this way, processing resources of the computer are not occupied. Therefore, when data transmission between the model training apparatuses is implemented by using the RDMA technology, the model training apparatus may store to-be-transmitted data in a memory, so that the data in the memory is directly transferred to a memory of the another model training apparatus through the network. In this way, consumption of processing resources of the two model training apparatuses is reduced.

A fourth aspect of this application provides a model training system, including at least two model training apparatuses. The at least two model training apparatuses jointly participate in model training, and any one of the at least two model training apparatuses interacts with another model training apparatus and performs model training by using the method according to any one of the implementations of the first aspect.

A fifth aspect of this application provides a computer-readable storage medium. The computer-readable storage medium stores a computer program. When the computer program is run on a computer, the computer is enabled to perform the method according to any one of the implementations of the first aspect.

A sixth aspect of this application provides a circuit system. The circuit system includes a processing circuit, and the processing circuit is configured to perform the method according to any one of the implementations of the first aspect.

A seventh aspect of this application provides a computer program product. When the computer program product runs on a computer, the computer is enabled to perform the method according to any one of the implementations of the first aspect.

An eighth aspect of this application provides a chip system. The chip system includes a processor, configured to support a server or a threshold obtaining apparatus in implementing a function in any one of the implementations of the first aspect, for example, sending or processing data and/or information in the foregoing methods. In a possible design, the chip system further includes a memory. The memory is configured to store program instructions and data that are necessary for the server or a communication device. The chip system may include a chip, or may include a chip and another discrete device.

For beneficial effects of the second aspect to the eighth aspect, refer to the descriptions of the first aspect. Details are not described herein again.

## BRIEF DESCRIPTION OF DRAWINGS

FIG. 1 is a diagram of an application scenario of a model training method according to an embodiment of this application;
FIG. 2 is a diagram of a structure of an electronic device 101 according to an embodiment of this application;
FIG. 3 is a schematic flowchart of a model training method according to an embodiment of this application;
FIG. 4A is a diagram of performing model training by a plurality of training apparatuses according to an embodiment of this application;
FIG. 4B is a diagram of comparison of training duration when training data is grouped and not grouped according to an embodiment of this application;
FIG. 5 is a diagram of a training process according to an embodiment of this application;
FIG. 6 is a diagram of another training process according to an embodiment of this application;
FIG. 7 is a diagram of a training architecture according to an embodiment of this application;
FIG. 8 is a schematic flowchart of performing parallel task scheduling by a training apparatus 3 according to an embodiment of this application;
FIG. 9 is a schematic flowchart of performing parallel task scheduling by a training apparatus 4 according to an embodiment of this application;
FIG. 10 is a diagram of a structure of a model training apparatus according to an embodiment of this application;
FIG. 11 is a diagram of a structure of an execution device according to an embodiment of this application;
FIG. 12 is a diagram of a structure of a chip according to an embodiment of this application; and
FIG. 13 is a diagram of a structure of a computer-readable storage medium according to an embodiment of this application.

## DESCRIPTION OF EMBODIMENTS

To make the objectives, technical solutions, and advantages of this application clearer and more comprehensible, the following describes embodiments of this application with reference to the accompanying drawings. It is clear that the described embodiments are only some but not all of embodiments of this application. A person of ordinary skill in the art may learn that, as a new application scenario emerges, the technical solutions provided in embodiments of this application are also applicable to a similar technical problem.

In the specification, claims, and the accompanying drawings of this application, the terms "first", "second", and the like are intended to distinguish between similar objects but do not necessarily indicate a specific order or sequence. It should be understood that the descriptions termed in such a manner are interchangeable in proper cases, so that embodiments can be implemented in another order than the content illustrated or described in this application. Moreover, terms "include", "have", and any other variants thereof mean to cover a non-exclusive inclusion. For example, a process, a method, a system, a product, or a device that includes a series of steps or modules is not necessarily limited to steps or modules expressly listed, but may include other steps or modules not expressly listed or inherent to such a process, method, product, or device. Naming or numbering of steps in this application does not mean that steps in a method procedure need to be performed based on a time/logical sequence indicated by the naming or numbering. An execution sequence of procedure steps that have been named or numbered may be changed based on a technical objective to be implemented, provided that same or similar technical effects can be achieved. Division into units in this application is logical division and may be other division during actual application. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected according to actual requirements to achieve objectives of solutions of this application.

For ease of understanding, the following first describes technical terms in embodiments of this application.

(1) Distributed training

Distributed training means that a model is trained by using a plurality of apparatuses located in different places, to effectively utilize computing resources of the apparatuses to complete a model training task that is difficult to be completed by using a single apparatus.

(2) Federated learning

Federated learning is essentially a model training method, and can implement data sharing and joint model building while ensuring data privacy security and legal compliance. A core idea of federated learning is to perform joint model training only by exchanging intermediate parameters of the model without the need to transfer raw data when a plurality of data source parties participate in model training together. The raw data can remain local. In this way, a balance between data privacy protection and data sharing as well as analysis is achieved, that is, a data application mode of "data available and invisible" is achieved.

Based on different distributions of data used in federated learning among participating parties, federated learning can be classified into three types: horizontal federated learning (Horizontal Federated Learning, HFL), vertical federated learning (Vertical Federated Learning, VFL), and federated transfer learning (Federated Transfer Learning, FTL). The following describes different data distributions for the three types of federated learning.

(3) Horizontal federated learning

Horizontal federated learning means that features of data from different participating parties in federated learning overlap greatly, but an overlapping degree of data samples (namely, samples to which a feature belongs) is not high. For example, participating parties of federated learning are two banks that serve different regional markets. Customer groups served by the two banks vary greatly, but features of customers may have a high overlapping degree due to similar business models.

(4) Vertical federated learning

Vertical federated learning means that data samples from different participating parties in federated learning overlap greatly, but an overlapping degree of sample features is not high. For example, two companies (a bank company and an e-commerce company) separately provide different services to customers, and the two companies possess data on different aspects of the customers, but customer groups served by the two companies overlap greatly.

Generally, in a current federated learning scenario, an application scenario of vertical federated learning is most widely used. Therefore, a vertical federated learning algorithm is conducive to establishing cooperation between enterprises, and jointly building a more powerful model by using respective unique data.

(5) Federated transfer learning

Federated transfer learning means that data from different participating parties in federated learning does not overlap very much in feature and sample dimensions.

(6) Neural network

The neural network is also referred to a model. The neural network is an algorithm mathematical model that simulates behavior features of an animal neural network and performs distributed parallel information processing. The neural network relies on a complexity degree of a system, and adjusts interconnection relationships among a large quantity of internal nodes, thereby processing information.

Specifically, the neural network may include a neuron. The neuron may be an operation unit that uses $x_s$ (namely, input data) and an intercept 1 as an input. An output of the operation unit may be as follows:

$$h_{W,b}\left(x\right) = f\left(W^T x\right) = f(\sum\nolimits_{s=1}^{n} W_s x_s + b)$$

Herein, s=1, 2, ..., and n, n is a natural number greater than 1, $W_s$ is a weight of $x_s$, b is a bias of the neuron, and f is an activation function (activation function) of the neuron, and is used to introduce a non-linear characteristic into the neural network, to convert an input signal in the neuron into an output signal. The output signal of the activation function may be used as an input of a next convolutional layer, and the activation function may be a sigmoid function.

In general, the neural network is a network constituted by linking a plurality of single neurons together. To be specific, an output of a neuron may be an input of another neuron. An input of each neuron may be connected to a local receptive field of a previous layer to extract a feature of the local receptive field. The local receptive field may be a region including several neurons.

(7) Loss function

In a process of training the neural network, because it is expected that an output of the neural network is as close as possible to a predicted value that is actually expected, a predicted value of a current network and a target value that is actually expected may be compared, and then a weight vector of each layer of the neural network is updated based on a difference between the predicted value and the target value (certainly, there is usually an initialization process before a 1st update, that is, parameters are preconfigured for all layers of the neural network). For example, if the predicted value of the network is large, the weight vector is adjusted to decrease the predicted value, and adjustment is continuously performed, until the neural network can predict the target value that is actually expected or a value that is close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

In general, the loss function is used to measure a difference between the predicted value and an actual value and use the difference as a reference for model performance. A smaller value of the loss function indicates a smaller difference between a predicted output and an expected output (which is also referred to as an actual value) of a model, and indicates better performance of the model. A process of training the model is a process in which prediction is continuously performed by using training data, and a difference between a predicted output and an expected output is continuously adjusted, so that a value of the loss function continuously decreases.

(8) Gradient (gradient)

The gradient is a vector, indicating that a direction derivative of a function at a specific point has a maximum value in the direction. That is, the function changes the fastest in the direction of the gradient at the point, and a change rate is the largest.

(9) Gradient descent algorithm

The gradient descent algorithm is a method for finding a minimum of an objective function. Generally, to find a local minimum value of a function by using the gradient descent algorithm, it is necessary to perform iterative search on a point at a specified step size in a reverse direction of a gradient corresponding to a current point on the function.

Typically, the gradient descent algorithm is applied to solve a minimum value of the loss function. It can be learned from a principle based on the gradient descent algorithm that the loss function converges the fastest in an opposite direction of the gradient. That is, an extreme point can be found as soon as possible. When a gradient vector is 0, it indicates that the loss function reaches a minimum point, and model accuracy reaches a maximum point.

(10) Back propagation algorithm

Based on a characteristic of a neural network being deep and nested layer by layer, when a gradient of an objective function of the neural network is calculated, the gradient needs to be calculated from deep to shallow in a back propagation manner, and parameters need to be updated. Therefore, the back propagation algorithm is a specific implementation of the gradient descent algorithm on the neural network. In the neural network, an error back propagation (back propagation, BP) algorithm may be used to correct a value of a parameter in an initial model in a training process, so that an error loss of the model becomes increasingly small. Specifically, an input signal is transferred forward until an error loss occurs in an output, and the parameter in the initial model is updated based on back propagation error loss information, so that the error loss converges. The back propagation algorithm is an error-loss-centered back propagation motion intended to obtain a parameter, for example, a weight matrix, of an optimal model.

(11) Hyperparameter

There are usually two types of parameters in a machine learning model. One type is a model parameter, namely, a parameter of the model, that needs to be learned and estimated from data, for example, a weighting coefficient (slope) and a bias term (intercept) of a linear regression straight line. The other type is a tuning parameter (tuning parameter) in a machine learning algorithm, which needs to be manually specified, and is referred to as a hyperparameter (Hyperparameter). For example, the hyperparameter may include a batch size (batch size), a learning rate $\alpha$ in the gradient descent algorithm, and a quantity of iteration times epoch.

(12) Batch size (batch size)

The batch size indicates a quantity of data samples transferred to a program at a time for model training. For example, if a training dataset has 1000 pieces of data and batch_size is set to 100, the program first uses first 100 pieces of data in the training dataset, namely, the $1^{st}$ to $100^{th}$ pieces of data, to train a model. After training is completed based on the $1^{st}$ to $100^{th}$ pieces of data (that is, a weight of the model is updated), then $101^{st}$ to $200^{th}$ pieces of data are used to train the model, and training stops after the 1000 pieces of data in the training set are used for a $10^{th}$ time. The $1^{st}$ to $100^{th}$ pieces of data belong to a same batch of data, and the $101^{st}$ to $200^{th}$ pieces of data also belong to a same batch of data. By analogy, the training dataset has a total of 10 batches of data.

In model training, setting a batch size is intended to train a model based on a plurality of pieces of sample data at the same time. Parallelism of hardware apparatuses such as a GPU and an NPU can be effectively utilized, and the plurality of pieces of sample data can be processed in parallel, to improve training efficiency of the model. In addition, an average gradient value of the model can be determined based on the plurality of pieces of sample data, to improve training accuracy of the model, and avoid a gradient value fluctuation that is easily caused in a training process when a gradient value of the model is determined based on a single piece of sample data.

Currently, a federated learning technology is proposed to cope with a problem of a data silo. Due to privacy protection and business protection, in most business scenarios, data possessed by different enterprises or platforms cannot be directly exchanged.

For example, in an advertising scenario, an advertiser is a party that places an advertisement, and an advertising platform is a party that exposes the advertisement. The advertising platform possesses data such as user characteristics and click-through and exposure behaviors. The advertiser possesses conversion behavior data such as user download, activation, and purchase. Due to factors such as user privacy protection and business protection, it is difficult to directly exchange data between the advertiser and the advertising platform. As a result, effective data is scattered between the two parties, leading to a phenomenon of the data silo. Based on federated learning, the advertising platform and the advertiser perform joint training without sharing data resources and with data remaining local, implementing joint building of a model.

However, because a plurality of devices participating in federated learning are distributed in different places, in a process of performing federated learning, the plurality of devices usually need to exchange a large amount of data through a network. Due to a limited communication capability of the network, when there is a large amount of data to be exchanged between the plurality of devices, communication duration for exchanging data between the devices is usually greater than duration for training a model by the device. Consequently, an overall delay of federated learning is long.

In view of this, an embodiment of this application provides a model training method. A plurality of pieces of data of a same batch in a training process are divided into a plurality of groups of data, and a training apparatus sequentially processes the plurality of groups of data based on a model, to train the model. In addition, in a process of training the model, the training apparatus preferentially executes an operation of generating to-be-transmitted data, so that model training time is hidden in time for communication between training apparatuses, and the training apparatuses are prevented from being in a communication idle state as much as possible. Finally, idle waiting duration in an entire iterative process is shortened, and overall training efficiency is improved.

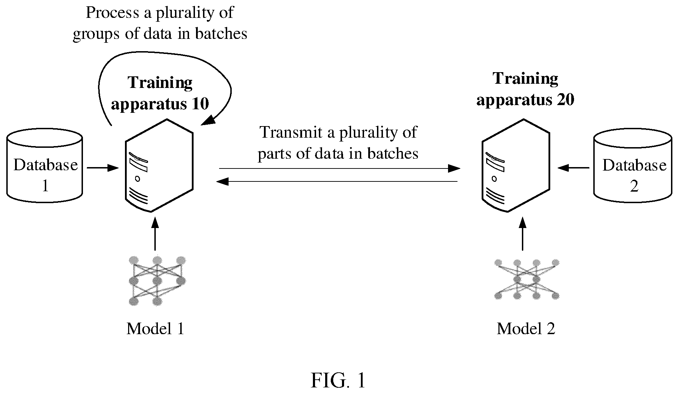

FIG. 1 is a diagram of an application scenario of a model training method according to an embodiment of this application. As shown in FIG. 1, a training apparatus 10 and a training apparatus 20 are two training apparatuses participating in model distributed training. In addition, the training apparatus 10 may obtain, from a local database 1, training data used for training a model, and the training apparatus 20 may obtain, from a local database 2, training data used for training a model. Moreover, the training apparatus 10 and the training apparatus 20 cannot directly exchange data in the database 1 and the database 2.

Furthermore, a model 1 is deployed in the training apparatus 10, and a model 2 is deployed in the training apparatus 20. The training apparatus 10 trains the model 1 based on the training data obtained from the database 1, and the training apparatus 20 trains the model 2 based on the training data obtained from the database 2. In addition, in a process in which the training apparatus 10 and the training apparatus 20 train the models, the training apparatus 10 and the training apparatus 20 exchange intermediate parameters (for example, data obtained by processing the training data based on a local model) of the models with each other, so that the two parties can cooperate with each other to complete training of the local model.

According to the model training method provided in this embodiment of this application, for any training apparatus (for example, the training apparatus 10 shown in FIG. 1) participating in distributed training, the training apparatus may divide a plurality of pieces of training data of one batch into a plurality of groups of data, and process the plurality of groups of data in batches by group based on a model, to gradually generate a plurality of parts of data to be transmitted to another training apparatus. Then, when processing the plurality of groups of data in batches, the training apparatus transmits a part or a plurality of parts of data generated by processing the data to the another training apparatus, to implement synchronous execution of data processing and data transmission. After obtaining data from the another training apparatus, the training apparatus continues to process the obtained data, to complete model training. In addition, in a process in which the training apparatus trains the model, the training apparatus preferentially executes an operation of generating to-be-transmitted data, to prevent the training apparatus from being in a communication idle state.

It should be noted that, in the application scenario shown in FIG. 1, this embodiment of this application is described by using an example in which the two training apparatuses participate in distributed training. During actual application, the apparatuses participating in distributed training may be two or more training apparatuses. A quantity of training apparatuses participating in distributed training is not limited herein.

Specifically, the model training method provided in this embodiment of this application may be applied to an electronic device, or a chip system on the electronic device, for example, a graphics processing unit (graphics processing unit, GPU) or a network processing unit (Neural network Processing Unit, NPU) on the electronic device. For example, the electronic device may be a server, a smartphone (mobile phone), a personal computer (personal computer, PC), a notebook computer, a tablet computer, a smart television, a mobile internet device (mobile internet device, MID), a wearable device, a virtual reality (virtual reality, VR) device, an augmented reality (augmented reality, AR) device, a wireless electronic device in industrial control (industrial control), a wireless electronic device in self driving (self driving), a wireless electronic device in remote medical surgery (remote medical surgery), a wireless electronic device in a smart grid (smart grid), a wireless electronic device in transportation safety (transportation safety), a wireless electronic device in a smart city (smart city), or a wireless electronic device in a smart home (smart home). For ease of description, the following describes the method provided in embodiments of this application by using an example in which the method provided in embodiments of this application is applied to a server.

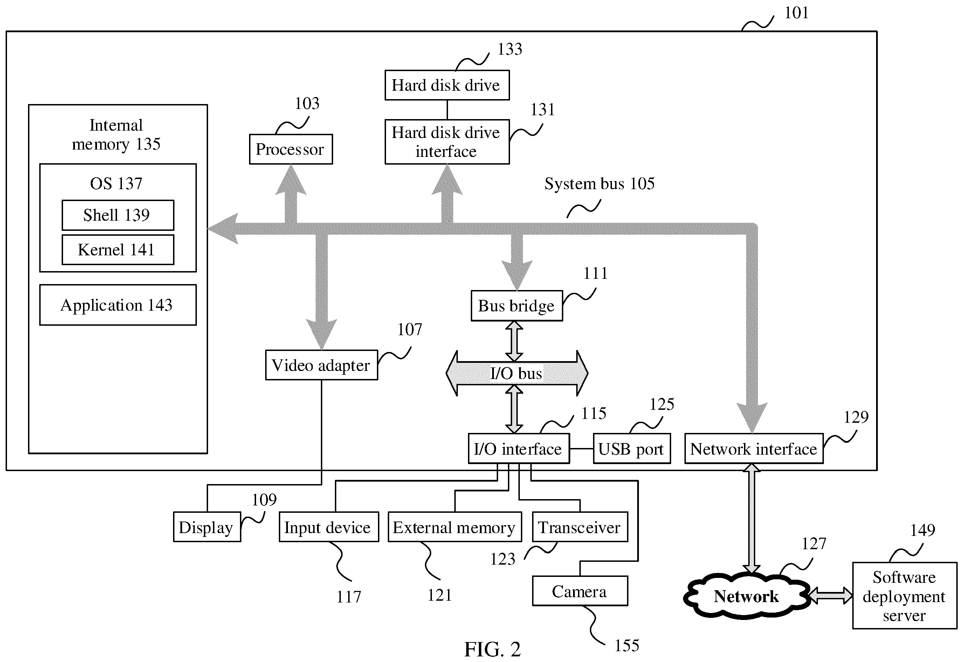

FIG. 2 is a diagram of a structure of an electronic device 101 according to an embodiment of this application. As shown in FIG. 2, the electronic device 101 includes a processor 103, and the processor 103 is coupled to a system bus 105. The processor 103 may be one or more processors, and each processor may include one or more processor cores. A video adapter (video adapter) 107 is further included, the video adapter may drive a display 109, and the display 109 is coupled to the system bus 105. The system bus 105 is coupled to an input/output (I/O) bus through a bus bridge 111. An I/O interface 115 is coupled to the I/O bus. The I/O interface 115 communicates with a plurality of I/O devices, such as an input device 117 (for example, a touchscreen), an external memory 121 (for example, a hard disk, a floppy disk, an optical disc, or a USB flash drive), a multimedia interface, a transceiver 123 (which may send and/or receive a radio communication signal), a camera 155 (which may capture static and dynamic digital video images), and an external USB port 125. Optionally, an interface connected to the I/O interface 115 may be a USB port.

The processor 103 may be any conventional processor, including a reduced instruction set computing (reduced instruction set Computing, RISC) processor, a complex instruction set computing (complex instruction set computing, CISC) processor, or a combination thereof. Optionally, the processor may be a dedicated apparatus, for example, an ASIC.

The electronic device 101 may communicate with a software deployment server 149 through a network interface 129. For example, the network interface 129 is a hardware network interface, for example, a network interface card. A network 127 may be an external network such as an internet, or may be an internal network such as an Ethernet or a virtual private network (virtual private network, VPN). Optionally, the network 127 may alternatively be a wireless network, for example, a Wi-Fi network, a cellular network, or the like.

A hard disk drive interface 131 is coupled to the system bus 105. The hardware drive interface is connected to a hard disk drive 133. An internal memory 135 is coupled to the system bus 105. Data running in the internal memory 135 may include an operating system (OS) 137, an application 143, and a schedule table of the electronic device 101.

The operating system includes a shell 139 and a kernel (kernel) 141. The shell 139 is an interface between a user and the kernel of the operating system. The shell is an outermost layer of the operating system. The shell manages interaction between the user and the operating system: waiting for an input from the user, interpreting the input from the user to the operating system, and processing various output results of the operating system.

The kernel 141 includes parts that are in the operating system and that are used to manage a memory, a file, a peripheral, and a system resource. The kernel 141 directly interacts with hardware, and the kernel of the operating system usually runs a process, provides interprocess communication, and provides functions such as CPU time slice management, interruption, memory management, and I/O management.

For example, when the electronic device 101 is a smartphone, the application 143 includes a program related to instant messaging. In an embodiment, when the application 143 needs to be executed, the electronic device 101 may download the application 143 from the software deployment server 149.

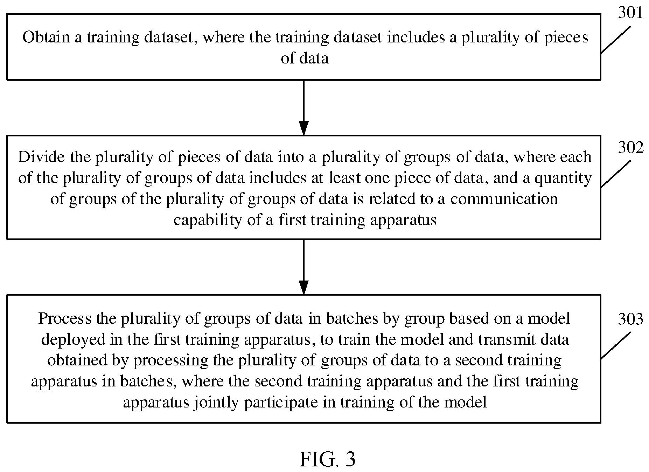

FIG. 3 is a schematic flowchart of a model training method according to an embodiment of this application. As shown in FIG. 3, the model training method provided in this embodiment of this application is applied to a first training apparatus, and the method includes the following steps 301 to 303.

Step 301: Obtain a training dataset, where the training dataset includes a plurality of pieces of data.

In this embodiment, the first training apparatus is a training apparatus participating in distributed training, and the first training apparatus is, for example, the foregoing electronic device or a chip in the electronic device.

Before performing model training, the first training apparatus may obtain a local training dataset. The training dataset is used to train a model. In addition, a batch size (batch size) may be obtained based on a hyperparameter preset in the model. The batch size indicates a data amount of data samples used to train the model at the same time, namely, a data amount of data samples that need to be used in one iterative training process of the model.

Therefore, all data in the training dataset can be divided into a plurality of batches based on the batch size preset in the model, a data amount of each batch is the same, and the data amount of each batch is determined by the batch size. For example, if a training dataset includes 10,000 images, and a batch size is 100, the training dataset may be divided into 100 batches, and each batch includes 100 images. For example, a $1^{st}$ batch includes $1^{st}$ to $100^{th}$ images, a $2^{nd}$ batch includes $101^{st}$ to $200^{th}$ images, and so on.

Optionally, the plurality of pieces of data obtained by the first training apparatus are data of one batch. In other words, a quantity of the plurality of pieces of data is the same as the batch size of the model.

Step 302: Divide the plurality of pieces of data into a plurality of groups of data, where each of the plurality of groups of data includes at least one piece of data, and a quantity of groups of the plurality of groups of data is related to a communication capability of the first training apparatus.

In this step, for the plurality of pieces of data, the first training apparatus may continue to divide the plurality of pieces of data, to obtain the plurality of groups of data. For example, if the plurality of pieces of data are data of one batch, and the plurality of pieces of data include 100 pieces of data in total, the first training apparatus may divide the 100 pieces of data into five groups of data, and each group of data includes 20 pieces of data.

For the plurality of groups of data, a data amount of each group of data is related to the communication capability of the first training apparatus. For example, the data amount of each group of data is in a positive correlation with the communication capability of the first training apparatus. That is, a stronger communication capability of the first training apparatus indicates a larger data amount of each group of data; and a weaker communication capability of the first training apparatus indicates a smaller data amount of each group of data.

It may be understood that a weaker communication capability of the first training apparatus indicates less data transmitted by the first training apparatus to another training apparatus in a unit time, and indicates less time that is consumed for the first training apparatus to transmit data of a specific data amount to the another training apparatus. Therefore, when the communication capability of the first training apparatus is weaker, the plurality of pieces of data are divided into more groups of data, so that training duration can be hidden in communication duration as much as possible. This reduces overall training delay overheads.

Step 303: Process the plurality of groups of data in batches by group based on the model deployed in the first training apparatus, to train the model and transmit a plurality of parts of data obtained by processing the plurality of groups of data to a second training apparatus in batches, where the second training apparatus and the first training apparatus jointly participate in training of the model.

In a process of training the model deployed in the first training apparatus, each of the plurality of groups of data is input into the model in batches by group, to process the plurality of groups of data in batches. In addition, in a process of sequentially processing the plurality of groups of data based on the model, a part of data is generated each time a group of data is processed, and the generated part of data needs to be transmitted to the second training apparatus, so that the second training apparatus cooperates to complete training of the model. In other words, the plurality of groups of data are processed based on the model to obtain the plurality of parts of data, and each group of data corresponds to a unique part of data. In addition, because the plurality of groups of data are processed in batches in this step, each of the plurality of parts of data in this step is also generated in batches and transmitted to the second training apparatus in batches.

In the process of training the model, after processing the plurality of groups of data in batches based on the model, the first training apparatus continues to transmit the plurality of parts of data obtained by processing the plurality of groups of data to the second training apparatus in batches. This facilitates the second training apparatus to cooperate with the first training apparatus to complete training of the model in the first training apparatus. The second training apparatus and the first training apparatus jointly participate in training of the model. The second training apparatus includes, for example, one or more training apparatuses. Training in which the first training apparatus and the second training apparatus jointly participate is, for example, federated learning described above, such as horizontal federated learning, vertical federated learning, or federated transfer learning. This is not specifically limited herein.

For example, after the first training apparatus processes the plurality of groups of data based on the model, and transmits the plurality of parts of data obtained by processing the plurality of groups of data to the second training apparatus, the second training apparatus processes the obtained plurality of parts of data based on a model in the second training apparatus, and returns a processing result to the first training apparatus. Finally, the first training apparatus updates a weight of the model in the first training apparatus based on the processing result returned by the second training apparatus, to implement one time of iterative training of the model.

In conclusion, the plurality of pieces of data are divided into the plurality of groups of data, and the plurality of groups of data are processed in batches based on the model, so that the plurality of parts of data obtained by processing the plurality of groups of data can be transmitted to the second training apparatus in batches. This allows the second training apparatus to perform calculation based on the obtained data as early as possible. In this way, training time of the second training apparatus is hidden in communication time, overall training duration of the model is reduced, and training efficiency of the model is improved.

Optionally, the quantity of the plurality of pieces of data obtained by the first training apparatus is related to the batch size of the model. For example, the quantity of the plurality of pieces of data is the same as the batch size of the model. In addition, in the process of training the model, a target gradient is related to a plurality of gradients obtained based on the plurality of groups of data, and the target gradient is used by the first training apparatus to update the model. For example, when the plurality of gradients are separately obtained based on the plurality of groups of data, the target gradient is obtained by calculating an average value of the plurality of gradients.

It may be understood that, in a normal process of training a model, a training apparatus usually trains the model based on a plurality of pieces of data of one batch at the same time to obtain a gradient, and updates the model based on the obtained gradient. In this solution, a plurality of pieces of data of one batch are divided into a plurality of groups of data, and the model is sequentially trained based on the plurality of groups of data. Therefore, a plurality of gradients related to the plurality of groups of data are obtained. In this case, in this solution, the target gradient is obtained based on the plurality of gradients, and the model is updated based on the target gradient. This can ensure that the model is updated based on data of one batch, and ensure that accuracy of model training is not affected.

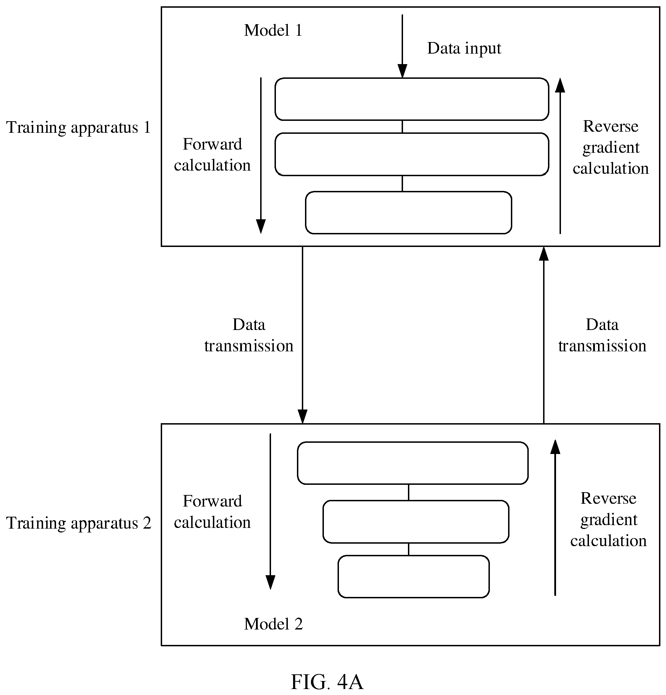

For example, FIG. 4A is a diagram of performing model training by a plurality of training apparatuses according to an embodiment of this application. As shown in FIG. 4A, a model 1 is deployed in a training apparatus 1, and a model 2 is deployed in a training apparatus 2. The training apparatus 1 is, for example, the first training apparatus in this embodiment of this application, and the training apparatus 2 is, for example, the second training apparatus in this embodiment of this application.

For the model 1 in the training apparatus 1, in a process of training the model 1, training data is first input into the model 1, and the training apparatus 1 performs forward calculation based on the model 1, that is, processes the input training data based on the model 1, to obtain data that needs to be transmitted to the training apparatus 2. Then, the training apparatus 1 transmits data obtained by performing forward calculation on the model 1 to the training apparatus 2. After receiving the data transmitted by the training apparatus 1, the training apparatus 2 performs forward calculation on the model 2 based on local training data and the data transmitted by the training apparatus 1, and performs reverse gradient calculation on the model 2 based on a forward calculation result of the model 2, to obtain gradient data corresponding to the model 2. Then, the training apparatus 2 transmits the gradient data obtained by performing reverse gradient calculation to the training apparatus 1, and the training apparatus 1 continues to perform reverse gradient calculation on the model 1 based on the received data. Finally, the training apparatus 1 updates a weight in the model 1 based on gradient data obtained through reverse gradient calculation, to implement one time of iterative training of the model 1.

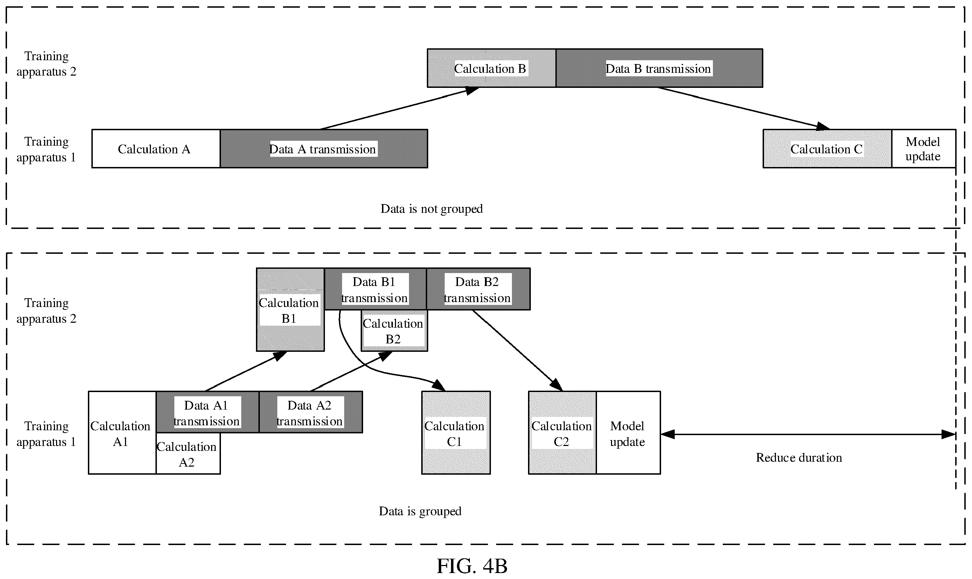

FIG. 4B is a diagram of comparison of training duration when training data is grouped and not grouped according to an embodiment of this application. Comparison of the training duration in the two cases shown in FIG. 4B is all based on the model training procedure shown in FIG. 4A. As shown in FIG. 4B, when data is not grouped, the training apparatus 1 does not group the input training data when training the model 1, that is, trains the model 1 based on training data of one batch at the same time. Specifically, the training apparatus 1 first performs forward calculation (namely, calculation A in FIG. 4B) on a plurality of pieces of data of a same batch based on the model 1, to obtain data A. Then, the training apparatus 1 transmits the data A to the training apparatus 2. After the training apparatus 2 receives the data A transmitted by the training apparatus 1, the training apparatus 2 performs forward calculation and reverse gradient calculation (namely, calculation B in FIG. 4B) on the model 2 based on the data A, to obtain data B. Then, the training apparatus 2 transmits the data B to the training apparatus 1. After the training apparatus 1 receives the data B transmitted by the training apparatus 2, the training apparatus 1 performs reverse gradient calculation (namely, calculation C in FIG. 4B) on the model 1, and finally updates a weight in the model based on an obtained gradient, to complete one time of iterative training of the model.

It can be learned from FIG. 4B that, when the input data is not grouped, all calculation and data transmission in the training apparatus 1 and the training apparatus 2 are performed in serial, and time for data transmission is long. The training apparatus 1 and the training apparatus 2 are prone to being in an idle waiting state for a long period of time. As a result, an overall training delay of the model is long.

When data is grouped, the training apparatus 1 groups the input training data when training the model 1, that is, divides training data of one batch into two groups to train the model 1. Specifically, the training apparatus 1 first divides the input data of one batch into two groups, and performs forward calculation (namely, calculation A1 in FIG. 4B) on a plurality of pieces of data in a first group based on the model 1, to obtain data A1. Then, the training apparatus 1 transmits the data A1 to the training apparatus 2. When the training apparatus 1 transmits the data A1 to the training apparatus 2, the training apparatus 1 continues to perform forward calculation (namely, calculation A2 in FIG. 4B) on a plurality of pieces of data in a second group based on the model 1, to obtain data A2. Because data transmission duration is greater than calculation duration of the model 1, the data A2 obtained by the training apparatus 1 by performing calculation A2 continues to be transmitted after the data A1 is transmitted.

After the training apparatus 2 receives the data A1 transmitted by the training apparatus 1, the training apparatus 2 performs forward calculation and reverse gradient calculation (namely, calculation B1 in FIG. 4B) on the model 2 based on the data A1, to obtain data B1. Then, the training apparatus 2 transmits the data B1 to the training apparatus 1. In addition, after the training apparatus 2 performs calculation B1, when the training apparatus 2 receives the data A2 transmitted by the training apparatus 1, the training apparatus 2 continues to perform forward calculation and reverse gradient calculation (namely, calculation B2 in FIG. 4B) on the model 2 based on the data A2, to obtain data B2, and transmits the data B2 to the training apparatus 1.

After the training apparatus 1 receives the data B1 transmitted by the training apparatus 2, the training apparatus 1 performs reverse gradient calculation (namely, calculation C1 in FIG. 4B) on the model 1 based on the data B1. After the training apparatus 1 receives the data B2 transmitted by the training apparatus 2, the training apparatus 1 performs reverse gradient calculation (namely, calculation C2 in FIG. 4B) on the model 1 based on the data B2. Finally, the training apparatus 1 updates a weight in the model based on a gradient obtained through calculation C1 and calculation C2, to complete one time of iterative training of the model.

It can be learned from FIG. 4B that, when the input data is grouped by batch, some of calculation and data transmission in the training apparatus 1 and the training apparatus 2 may be performed in parallel. For example, calculation A2 and data A1 transmission in the training apparatus 1 may be performed in parallel. For another example, data A2 transmission in the training apparatus 1 and calculation B1 in the training apparatus 2 may be performed in parallel. In this way, training time and communication time of one party are in parallel with training time of the other party. That is, the training time of the other party is hidden in the communication time. This shortens idle waiting duration in an entire iterative training process, saves a large amount of training time, and effectively improves training efficiency of the model.

In this embodiment, a plurality of pieces of data in a training process are divided into a plurality of groups of data, and a training apparatus processes the plurality of groups of data in batches based on a model, and transmits a plurality of parts of data obtained by processing the plurality of groups of data to another training apparatus in batches, to train the model. In this way, when transmitting data obtained by processing data in a previous group number to the another training apparatus, the training apparatus can still continue to process data in a subsequent group number, so that model training time is hidden in time for communication between training apparatuses. This finally shortens idle waiting duration in an entire iterative process, and improves overall training efficiency.

For example, after the training apparatus processes a 1$^{st}$ group of data and obtains a 1$^{st}$ part of data, the training apparatus may process a 2$^{nd}$ group of data at the same time when transmitting the 1$^{st}$ part of data to the another training apparatus. In other words, when transmitting data obtained by processing data in a previous group number to the another training apparatus, the training apparatus can still continue to process data in a subsequent group number.

Optionally, when the quantity of the plurality of pieces of data is related to the batch size of the model (for example, the quantity of the plurality of pieces of data is the same as the batch size of the model), for the plurality of groups of data, the quantity of groups of the plurality of groups of data is in a positive correlation with a to-be-transmitted data amount, and the quantity of groups of the plurality of groups of data is in a negative correlation with the communication capability and training duration of the first training apparatus. The to-be-transmitted data amount is a data amount of to-be-transmitted data generated after the plurality of groups of data are processed, and the training duration is duration for training the model by the first training apparatus based on the plurality of groups of data.

In other words, a larger data amount of the to-be-transmitted data generated after the plurality of groups of data are processed indicates a larger quantity of groups of the plurality of groups of data, to reduce to-be-transmitted data generated after each group of data is processed, and avoid an excessively large data amount of the to-be-transmitted data generated after each group of data is processed. In addition, a stronger communication capability of the first training apparatus indicates more data that can be transmitted by the first training apparatus to the second training apparatus in a unit time, and indicates that a smaller quantity of groups of the plurality of groups of data may be obtained through division. Longer duration for training the model by the first training apparatus based on the plurality of groups of data indicates a slower speed at which the first training apparatus generates the to-be-transmitted data by processing the plurality of groups of data, and indicates that a smaller quantity of groups of the plurality of groups of data may be obtained through division.

For example, the first training apparatus divides data of one batch, and the obtained quantity of groups of the plurality of groups of data may be represented by using the following formula:

$$Batch\_size * Seq\_length * hidden\_size * 32 / BandWith / train\_time$$

Batch_size indicates a batch size, Seq_length indicates a size of one dimension of a calculation matrix, hidden_size indicates a feature dimension of a model hidden layer, BandWith indicates a bandwidth, and train_time indicates training duration of a model. Batch_size*Seq_length*hidden_size*32 indicates a data amount of the to-be-transmitted data generated when the first training apparatus processes the plurality of groups of data based on the model, BandWith indicates an amount of data that can be transmitted by the first training apparatus to the second training apparatus in a unit time, and train_time indicates duration required for processing the plurality of groups of data by the first training apparatus. Therefore, Batch_size*Seq_length*hidden_size*32/BandWith indicates duration required for transmitting all data by the first training apparatus to the second training apparatus. Based on this, Batch_size*Seq_length*hidden_size*32/BandWith/train_time (namely, the quantity of groups of the plurality of groups of data) can indicate a ratio of the duration required for transmitting all the data by the first training apparatus to the second training apparatus to duration required for processing the plurality of groups of data by the first training apparatus.

Optionally, for the first training apparatus, an operation executed by the first training apparatus in the process of training the model includes a first-type operation and a second-type operation. The first-type operation is used to generate, based on the plurality of groups of data, the plurality of parts of data to be transmitted to the second training apparatus. That is, the first-type operation is an operation that depends on the plurality of groups of data to generate the to-be-transmitted data. The second-type operation is used to generate data processed only by the first training apparatus. That is, whether the second-type operation is executed does not affect generation of the to-be-transmitted data. For example, the first-type operation includes an operation of processing the plurality of groups of data based on the model (namely, forward calculation performed on the model 1 in FIG. 4A), and the second-type operation includes an operation of performing reverse gradient calculation on the model based on the data obtained from the second training apparatus (namely, reverse gradient calculation performed on the model 1 in FIG. 4A).

In addition, an execution priority of the first-type operation is higher than an execution priority of the second-type operation. In other words, in the training process, when both the first-type operation and the second-type operation that can be executed exist, the first training apparatus preferentially executes the first-type operation. After all first-type operations are executed, the first training apparatus executes the second-type operation.

For example, in the model 1 shown in FIG. 4A, the first-type operation may be forward calculation performed by the first training apparatus on the model 1 based on the plurality of groups of data. Forward calculation performed on the model 1 can generate the data that needs to be transmitted to the second training apparatus. The second-type operation may be reverse gradient calculation performed by the first training apparatus on the model 1 based on the data returned by the second training apparatus. Reverse gradient calculation performed on the model 1 can generate gradient data of the model 1, and the gradient data of the model 1 is data that is further processed by only the first training apparatus to update the weight of the model 1.

In other words, in this embodiment, for the first-type operation that affects generation of the to-be-transmitted data and the second-type operation that does not affect generation of the to-be-transmitted data, the training apparatus preferentially executes the first-type operation, so that the to-be-transmitted data can be continuously generated, to prevent the training apparatus from being in a communication idle state as much as possible, and ensure that time for parallel communication and training is as long as possible. This shortens idle waiting duration in an entire iterative process, and improves overall training efficiency.

Further, in some possible embodiments, the first-type operation may include a first-subtype operation and a second-subtype operation, an operation result of the first-subtype operation is used to obtain an input of the second-subtype operation, and an operation result of the second-subtype operation is used to be transmitted to the second training apparatus. In other words, the operation result obtained by the first training apparatus by executing the second-subtype operation is the data that needs to be transmitted to the second training apparatus, and the operation result obtained by the first training apparatus by executing the first-subtype operation is used as the input of the second-subtype operation. That is, execution of the second-subtype operation depends on the first-subtype operation. In the actual training process, only after the first-subtype operation is first executed, data that is used as the input of the second-subtype operation can be obtained, and then the second-subtype operation can be executed.

It should be noted that, although the first-subtype operation does not directly generate the to-be-transmitted data, execution of the second-subtype operation that directly generates the to-be-transmitted data depends on execution of the first-subtype operation. Therefore, the first-subtype operation also belongs to the first-type operation. That is, the first-subtype operation may also be understood as generating the data to be transmitted to the second training apparatus. Therefore, for the first-subtype operation, an execution priority of the first-subtype operation is also higher than an execution priority of the second-type operation.

Optionally, for both the first-subtype operation and the second-subtype operation that belong to the first-type operation, an execution priority of the second-subtype operation is higher than an execution priority of the first-subtype operation.

It may be understood that execution of the second-subtype operation depends on the first-subtype operation. Therefore, in the training process, the first training apparatus needs to first execute the first-subtype operation and obtain the operation result, and then can continue to execute the second-subtype operation based on the obtained operation result. That is, the second-subtype operation can be executed only after an operation condition of the second-subtype operation is met. However, after the operation condition of the second-subtype operation is met, the first training apparatus preferentially executes the second-subtype operation, to generate the data to be transmitted to the second training apparatus as soon as possible.

For example, the model deployed by the first training apparatus includes, for example, a first submodel and a second submodel. The first-type operation includes an operation of processing the plurality of groups of data based on the first submodel, and an operation of processing the second submodel based on data obtained from the second training apparatus. For example, after processing the plurality of groups of data based on the first submodel, the first training apparatus generates data to be transmitted to the second training apparatus; and after processing the second submodel based on data obtained from the second training apparatus, the first training apparatus continues to generate data to be transmitted to the second training apparatus. That is, the first-type operation includes two operations (namely, the operation of processing the plurality of groups of data based on the first submodel and the operation of processing the second submodel based on the data obtained from the second training apparatus). The two operations can separately generate different types of data, and all the generated data needs to be transmitted to the second training apparatus.

Optionally, an input of the second submodel may further include an operation result of processing the plurality of groups of data based on the first submodel. That is, an operation related to the second submodel is actually an operation executed on the second submodel based on the operation result of the first submodel and the data obtained from the second training apparatus. In this case, the first-type operation includes the operation of processing the plurality of groups of data based on the first submodel, and the operation of processing the second submodel based on the operation result of the first submodel and the data obtained from the second training apparatus.

The second-type operation may include an operation of performing reverse gradient calculation on the first submodel.

For ease of understanding, the following describes in detail, with reference to a specific example, the model deployed by the first training apparatus, and the first-type operation and the second-type operation that are executed based on the model.

(1) The model deployed by the first training apparatus does not include a submodel.

For example, with reference to FIG. 4A, the first training apparatus is, for example, the training apparatus 1 in FIG. 4A, and the model deployed by the first training apparatus is, for example, the model 1 in FIG. 4A; and the second training apparatus is, for example, the training apparatus 2 in FIG. 4A, and the model deployed by the second training apparatus is, for example, the model 2 in FIG. 4A.

In this case, in the training process, the first-type operation may be, for example, forward calculation performed on the model 1 in FIG. 4A, and the second-type operation may be, for example, reverse gradient calculation performed on the model 1 in FIG. 4A.

(2) The model deployed by the first training apparatus includes two submodels, and both the two submodels generate data that needs to be transmitted to the second training apparatus.

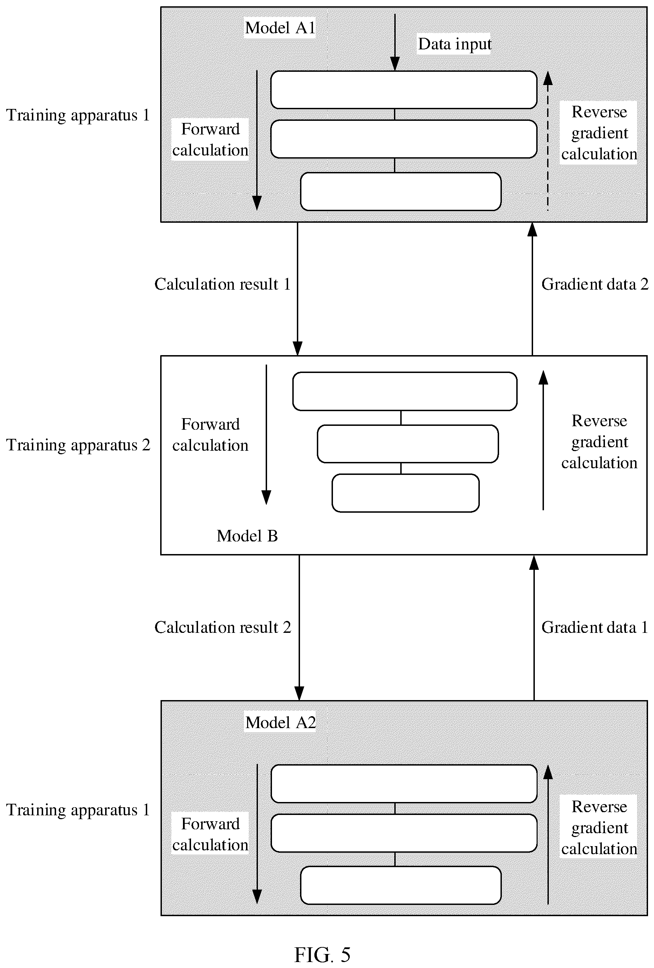

For example, FIG. 5 is a diagram of a training process according to an embodiment of this application. As shown in FIG. 5, a model A1 and a model A2 are deployed in a training apparatus 1, and a model B is deployed in a training apparatus 2.

In a training process, the training apparatus 1 performs forward calculation on the model A1 based on a local training dataset, and transmits an obtained calculation result 1 to the training apparatus 2. The training apparatus 2 performs forward calculation on the model B based on the calculation result 1 sent by the training apparatus 1, to obtain a calculation result 2, and returns the obtained calculation result 2 to the training apparatus 1. The training apparatus 1 performs forward calculation on the model A2 based on the calculation result 2 returned by the training apparatus 2, and performs reverse gradient calculation on the model A2 based on a finally obtained calculation result, to obtain gradient data 1.

Then, the training apparatus 1 transmits the gradient data 1 to the training apparatus 2, and the training apparatus 2 performs reverse gradient calculation on the model B based on the gradient data 1. After completing reverse gradient calculation on the model B, the training apparatus 2 transmits obtained gradient data 2 to the training apparatus 1. The training apparatus 1 performs reverse gradient calculation on the model A1 based on the gradient data 2.

It should be noted that the foregoing training procedure is for a group of data initially input by the training apparatus 1. The training apparatus 1 divides a plurality of pieces of data of a same batch into a plurality of groups of data. Therefore, in an actual training process, for data of one batch, the training apparatus 1 and the training apparatus 2 need to perform calculation in the foregoing procedure for a plurality of times.

Specifically, the first training apparatus is, for example, the training apparatus 1 in FIG. 5, and the second training apparatus is, for example, the training apparatus 2 in FIG. 5. The first-type operation includes, for example, forward calculation performed by the training apparatus 1 on the model A1, and forward calculation and reverse gradient calculation that are performed by the training apparatus 1 on the model A2. Further, in the first-type operation, the first-subtype operation is, for example, forward calculation performed by the training apparatus 1 on the model A2, that is, the forward calculation does not directly generate data that needs to be transmitted to the training apparatus 2, but generates data that is used as an input for reverse gradient calculation; and the second-subtype operation is, for example, forward calculation performed by the training apparatus 1 on the model A1 and reverse gradient calculation performed by the training apparatus 1 on the model A2. The second-type operation is, for example, reverse gradient calculation performed by the training apparatus 1 on the model A1.

(3) The model deployed by the first training apparatus includes two submodels, and only one submodel generates data that needs to be transmitted to the second training apparatus.

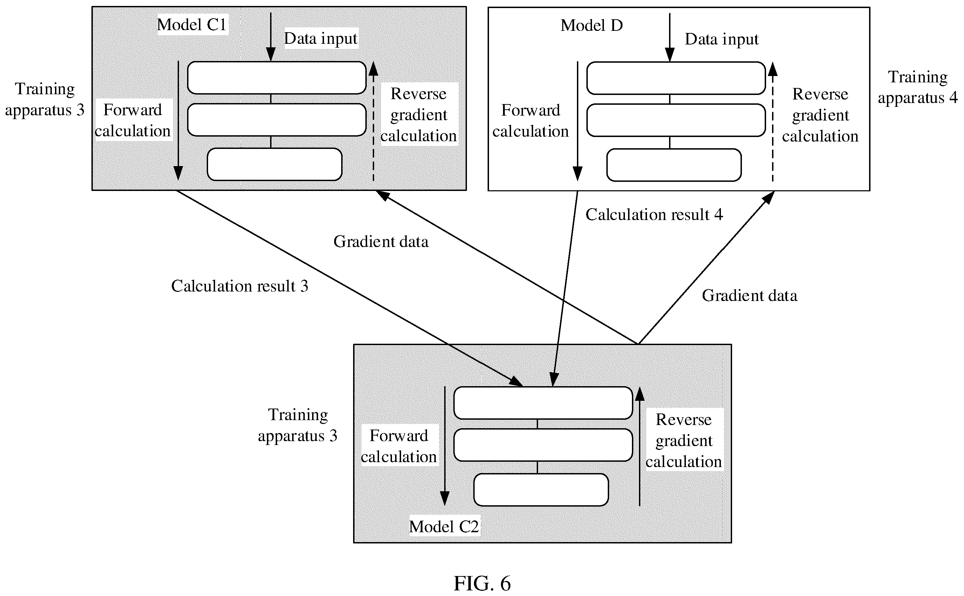

For example, FIG. 6 is a diagram of another training process according to an embodiment of this application. As shown in FIG. 6, models C1 and C2 are deployed in a training apparatus 3, and a model D is deployed in a training apparatus 4.

In a training process, the training apparatus 3 performs forward calculation on the model C1 based on a local training dataset, to obtain a calculation result 3. The training apparatus 4 performs forward calculation on the model D based on the local training dataset, to obtain a calculation result 4, and transmits the obtained calculation result 4 to the training apparatus 3.

After obtaining the calculation result 3 and the calculation result 4, the training apparatus 3 performs forward calculation on the model C2 based on the calculation result 3 and the calculation result 4, and performs reverse gradient calculation on the model C2 based on a result obtained through forward calculation, to obtain gradient data. Then, the training apparatus 3 transmits the gradient data to the training apparatus 4, so that the training apparatus 4 performs reverse gradient calculation on the model D based on the received gradient data. In addition, the training apparatus 3 further continues to perform reverse gradient calculation on the model C1 based on the gradient data obtained by performing reverse gradient calculation on the model C2, to obtain gradient data of the model C1.

Similarly, the foregoing training procedure is for a group of data initially input by the training apparatus 3 and the training apparatus 4. In an actual training process, both the training apparatus 3 and the training apparatus 4 divide a plurality of pieces of data of a same batch into a plurality of groups of data. Therefore, for data of one batch, the training apparatus 3 and the training apparatus 4 need to perform calculation in the foregoing procedure for a plurality of times.

Specifically, the first training apparatus is, for example, the training apparatus 3 in FIG. 6, and the second training apparatus is, for example, the training apparatus 4 in FIG. 6. The first-type operation includes, for example, forward calculation performed by the training apparatus 1 on the model C1, and forward calculation and reverse gradient calculation that are performed by the training apparatus 1 on the model C2. Further, in the first-type operation, the first-subtype operation is, for example, forward calculation performed by the training apparatus 1 on the model C2, that is, the forward calculation does not directly generate data that needs to be transmitted to the training apparatus 4, but generates data that is used as an input for reverse gradient calculation; and the second-subtype operation is, for example, forward calculation performed by the training apparatus 3 on the model C1 and reverse gradient calculation performed by the training apparatus 3 on the model C2. The second-type operation is, for example, reverse gradient calculation performed by the training apparatus 3 on the model C1.

Alternatively, the first training apparatus is, for example, the training apparatus 4 in FIG. 6, and the second training apparatus is, for example, the training apparatus 3 in FIG. 6. The first-type operation is, for example, forward calculation performed by the training apparatus 4 on the model D, and the second-subtype operation is, for example, reverse gradient calculation performed by the training apparatus 4 on the model D. The second-type operation is, for example, reverse gradient calculation performed by the training apparatus 4 on the model D.

In the foregoing three examples, an example in which the first training apparatus includes one or two submodels is used to describe in detail the first-type operation and the second-type operation that are executed by the first training apparatus in the training process. During actual application, the model deployed by the first training apparatus may alternatively be another type of model, and the first-type operation and the second-type operation that are executed by the first training apparatus may alternatively be determined based on the model deployed by the first training apparatus. A specific form of the model deployed by the first training apparatus is not limited in this embodiment.

The foregoing embodiment describes a case in which an execution priority of the first-type operation is higher than an execution priority of the second-type operation. Therefore, when the first-type operation meets an execution condition, the first training apparatus always preferentially executes the first-type operation.

However, in some cases, if an execution speed of the first-type operation is far quicker than a communication speed of the first training apparatus, a large amount of to-be-transmitted data generated when the first training apparatus executes the first-type operation is cached into a memory to wait for transmission. In addition, as the first-type operation is continuously executed, more data is cached into the memory, causing excessively high memory pressure. Based on this, this embodiment proposes switching from executing the first-type operation to executing the second-type operation when a specific condition is met, to alleviate memory pressure.

For example, in a process in which the first training apparatus trains the model, the first training apparatus caches, into a first queue, the data generated by executing the first-type operation. The first queue is a data structure that is in the memory and that is used to store data, and the first queue is specifically used to cache data to be transmitted to the second training apparatus. Based on the first queue, the data in the first queue can be sequentially transmitted to the second training apparatus. That is, data that first enters the first queue is first transmitted to the second training apparatus.

When a data amount of the data in the first queue is greater than or equal to a first threshold, the first training apparatus stops execution of the first-type operation, and executes the second-type operation. That is, when there is a large amount of data in the first queue, the first training apparatus no longer preferentially executes the first-type operation, but switches to execute the second-type operation. A value of the first threshold may be determined based on a size of a memory in the first training apparatus. This is not specifically limited herein.

It may be understood that, when there is a large amount of data in the first queue, it indicates that a speed at which the first training apparatus sends data to the second training apparatus is far slower than a speed at which the first training apparatus generates data by executing the first-type operation. Therefore, the first training apparatus continuing to preferentially execute the first-type operation does not improve overall training efficiency. In this case, to avoid excessive memory overheads, the first training apparatus may opt to switch to execute the second-type operation, thereby preventing accumulation of excessively generated to-be-transmitted data in a memory.

Further, when the data in the first queue is less than the first threshold, or when data used to support execution of the second-type operation has been processed, the first training apparatus stops executing the second-type operation, and continues to execute the first-type operation.

In other words, when the data in the first queue is consumed to a specific amount, to avoid a phenomenon that communication is idle because the data in the first queue is exhausted, the first training apparatus may continue to preferentially execute the first-type operation, to continuously generate the data to be transmitted to the second training apparatus, thereby ensuring continuity of data communication.

The data used to support execution of the second-type operation may be data that is used as an input of the second-type operation, namely, input data of the second-type operation. For example, in FIG. 4A, for the training apparatus 1, the second-type operation may be reverse gradient calculation performed by the training apparatus 1 on the model 1 based on the data returned by the training apparatus 2. In this case, the data used to support execution of the second-type operation is the data returned by the training apparatus 2.

A process in which the first training apparatus executes the second-type operation is actually a process of processing the input data of the second-type operation. After the first training apparatus processes the input data of the second-type operation, the data used to support execution of the second-type operation has been processed, and the first training apparatus cannot continue to execute the second-type operation. Therefore, the first training apparatus switches to continue to execute the first-type operation.

The foregoing describes the model deployed by the first training apparatus, and the first-type operation and the second-type operation that are executed based on the model. For ease of understanding, the following describes in detail, with reference to specific examples, a specific process in which a training apparatus executes the first-type operation and the second-type operation based on different priorities.

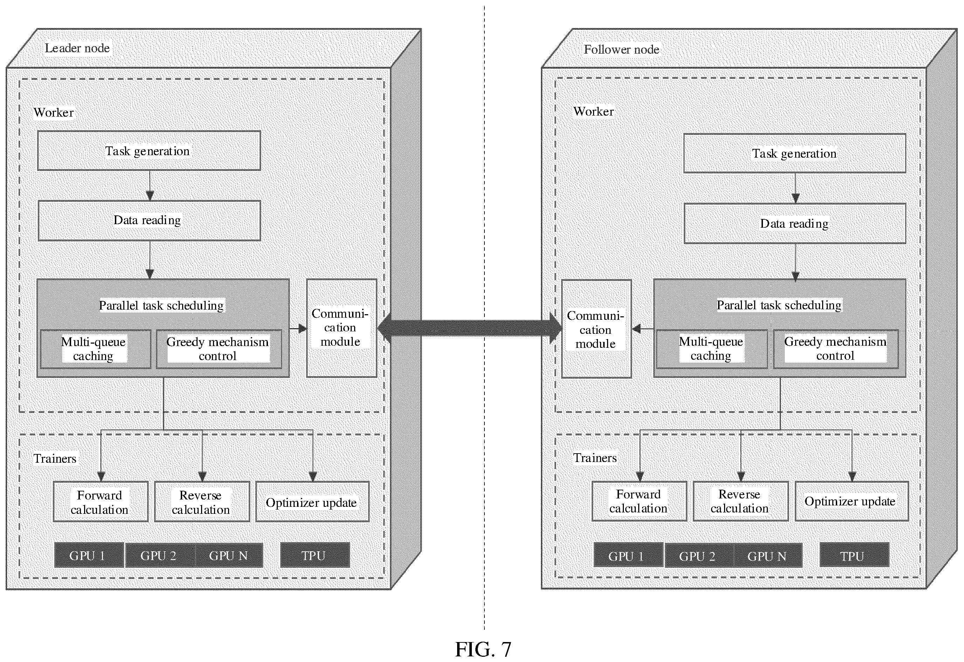

For example, FIG. 7 is a diagram of a training architecture according to an embodiment of this application. As shown in FIG. 7, two training apparatuses participating in training may be classified into a leader node (namely, a leader node in FIG. 7) and a follower node (namely, a follower node in FIG. 7) based on roles in a training task. The leader node may be a training apparatus that initiates the training task, and the follower node is a training apparatus that receives the training task and participates in training. The training process shown in FIG. 6 is used as an example. The training apparatus 3 may be the leader node, and the training apparatus 4 may be the follower node.

As shown in FIG. 7, for the leader node and the follower node, functional components configured to implement model training are the same in the leader node and the follower node, and a difference lies in training tasks. The leader node is used as an example. The leader node includes a worker (worker) and trainers (trainers).

The worker is responsible for task generation, data reading, parallel task scheduling, and data interaction with the follower node through a communication module. Task generation means to negotiate with the follower node before generating the training task to determine configuration information such as a training dataset, a to-be-trained model, a hyperparameter of the model, and an encryption algorithm in a data transmission process in the training task. Data reading means to read a training dataset required for training in a model training process. Parallel task scheduling includes two parts: multi-queue caching and greedy mechanism control. Multi-queue caching means that, in a training process, data obtained by performing different types of operations and communication is cached by queue, so that operation execution is determined based on a data amount in each queue. Greedy mechanism control means that, in a training process, operation execution is determined based on a data amount in each queue, so that an operation with a high priority is preferentially executed.

In addition, the trainers are responsible for performing forward calculation, reverse calculation, and optimizer update (that is, update of a model weight) on the model.

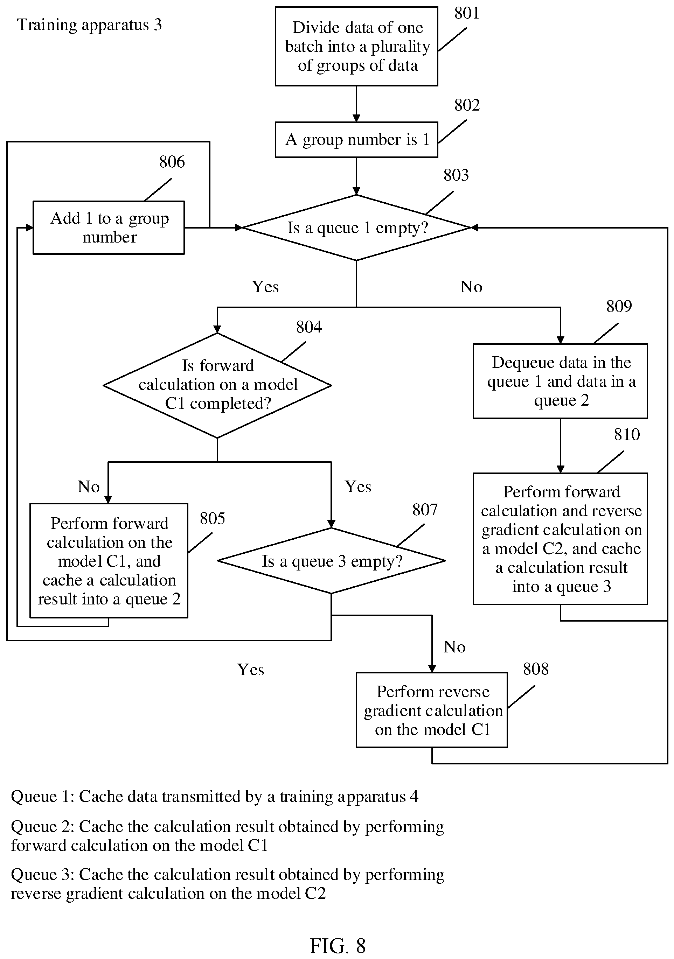

For ease of understanding, with reference to the training process shown in FIG. 6, the following describes in detail a process in which the training apparatus performs parallel task scheduling. FIG. 8 is a schematic flowchart of performing parallel task scheduling by a training apparatus 3 according to an embodiment of this application. As shown in FIG. 8, a process in which the training apparatus 3 performs parallel task scheduling includes the following steps 801 to 810.

Step 801: Divide data of one batch into a plurality of groups of data.

Specifically, the training apparatus 3 first obtains data of one batch based on a batch size of a model, and divides the data of the batch into a plurality of groups of data. Each group of data may be numbered in order.

Step 802: Determine that data that needs to be currently processed by a model is a group of data with a group number being 1.

Step 803: Determine whether a queue 1 is empty.

The queue 1 is used to cache data transmitted by the training apparatus 4 to the training apparatus 3. That is, the data cached into the queue 1 is input data used by the training apparatus 3 to perform forward calculation on the model C2.

Step 804: If the queue 1 is empty, determine whether forward calculation on the model C1 is completed.

Forward calculation on the model C1 means calculation performed by the training apparatus 3 on the model C1 based on a group of divided data. In a training process, the training apparatus 3 needs to perform forward calculation on the model C1 for a plurality of times, and forward calculation of each time is performed on the model C1 based on a group of divided data. Therefore, a quantity of times the training apparatus 3 performs forward calculation on the model C1 is the same as a quantity of groups of the plurality of groups of data.

If the training apparatus 3 has performed forward calculation on the model C1 for a plurality of times based on the plurality of groups of data, it indicates that forward calculation on the model C1 is completed. If the quantity of times the training apparatus 3 performs forward calculation on the model is less than the quantity of groups of the plurality of groups of data, it indicates that forward calculation on the model C1 is not completed.

Step 805: If forward calculation on the model C1 is not completed, perform forward calculation on the model C1, and cache, into a queue 2, a calculation result obtained by performing forward calculation on the model C1.

Specifically, the training apparatus 3 may obtain a corresponding group of data from the plurality of groups of data based on a currently determined group number, and perform forward calculation on the model C1 based on the obtained group of data.

Step 806: After forward calculation is performed on the model C1 based on the group of data, add 1 to a group number corresponding to to-be-processed data.

After 1 is added to the group number corresponding to the to-be-processed data, the training apparatus 3 can select a next group of data to perform calculation when performing forward calculation on the model C1 next time.

Step 807: If forward calculation on the model C1 is completed, determine whether a queue 3 is empty.

The queue 3 is used to cache a calculation result obtained by performing reverse gradient calculation on the model C2. That is, the data cached into the queue 3 is input data used for performing reverse gradient calculation on the model C1.

Step 808: If the queue 3 is not empty, perform reverse gradient calculation on the model C1 based on the data in the queue 3.

In addition, when the queue 1 is empty, forward calculation on the model C1 is completed, and the queue 3 is empty, the training apparatus 3 currently has no executable calculation. Therefore, the training apparatus 3 continues to perform step 803, to determine whether data transmitted by the training apparatus 4 exists in the queue 1, that is, continue to wait for the training apparatus 4 to transmit data.

Step 809: If the queue 1 is not empty, dequeue the data in the queue 1 and data in the queue 2 at the same time.

When the queue 1 is not empty, it indicates that the training apparatus 4 has transmitted data to the training apparatus 3. Therefore, the training apparatus 3 may extract the data in the queue 1 and the data in the queue 2, that is, extract data required for performing forward calculation on the model C2.

Step 810: Perform forward calculation and reverse gradient calculation on the model C2 based on the data dequeued from the queue 1 and the queue 2, and cache a calculation result obtained through reverse gradient calculation into the queue 3.

Finally, after the training apparatus 3 completes all reverse gradient calculation on the model C2, the training apparatus 3 updates the model C2 again based on a plurality of obtained gradients.

Similarly, after the training apparatus 3 completes all reverse gradient calculation on the model C1, the training apparatus 3 updates the model C1 again based on a plurality of obtained gradients.

In conclusion, in the procedure shown in FIG. 8, because the calculation result obtained by performing forward calculation on the model C1 is a basis of all other operations, the training apparatus 3 preferentially performs forward calculation on the model C1. Then, because calculation results obtained by the training apparatus 3 through forward calculation and reverse gradient calculation performed on the model C2 need to be transmitted to the training apparatus 4, after the training apparatus 3 can perform calculation on the model C2, the training apparatus 3 preferentially performs forward calculation and reverse gradient calculation on the model C2. Finally, when the training apparatus cannot perform the foregoing calculation, the training apparatus 3 performs reverse gradient calculation on the model C1.

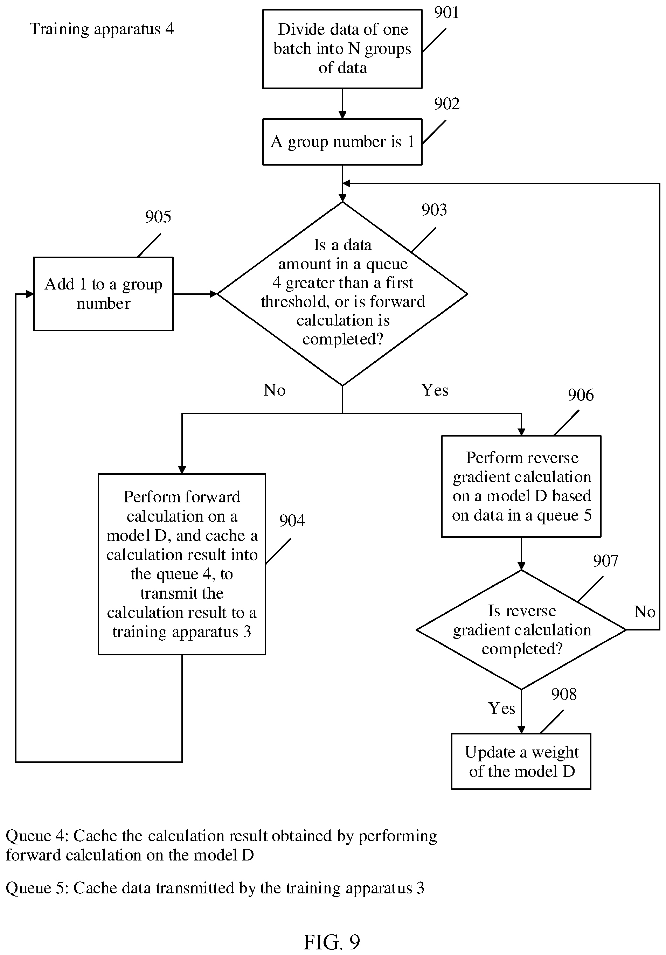

FIG. 9 is a schematic flowchart of performing parallel task scheduling by a training apparatus 4 according to an embodiment of this application. As shown in FIG. 9, a process in which the training apparatus 4 performs parallel task scheduling includes the following steps 901 to 908.

Step 901: Divide data of one batch into N groups of data.

Step 902: Determine that data that needs to be currently processed by a model is a group of data with a group number being 1.

Steps 901 and 902 in this embodiment are similar to the foregoing steps 801 and 802. For details, refer to the foregoing steps 801 and 802. Details are not described herein again.

Step 903: Determine whether a data amount in a queue 4 is greater than the first threshold, or whether forward calculation on the model D is completed.

The queue 4 is used to cache a calculation result obtained by the training apparatus 4 by performing forward calculation on the model D. If the data amount in the queue 4 is greater than the first threshold, it indicates that a speed at which the training apparatus 4 generates to-be-transmitted data obtained by performing forward calculation is far quicker than a speed at which the training apparatus 4 transmits data to the training apparatus 3. In addition, that forward calculation on the model D is completed may mean that the training apparatus 4 has performed forward calculation on the model D based on the N groups of data obtained through division.

Step 904: If the data amount in the queue 4 is not greater than the first threshold, and forward calculation on the model D is not completed, perform forward calculation on the model D, and cache a calculation result into the queue 4, to transmit the calculation result in the queue 4 to the training apparatus 3.

It should be noted that, after the calculation result is cached into the queue 4, the training apparatus 4 starts to transmit the calculation result in the queue 4 to the training apparatus 3. In addition, in a process in which the training apparatus 4 transmits data to the training apparatus 3, the training apparatus may still execute another operation.

Step 905: After forward calculation is performed on the model D once based on a group of data, add 1 to a group number corresponding to to-be-processed data.

After performing step 905, continue to perform the foregoing step 903.

Step 906: If the data amount in the queue 4 is greater than the first threshold, or forward calculation on the model D is completed, perform reverse gradient calculation on the model D based on data in a queue 5.

If the data amount in the queue 4 is greater than the first threshold, it indicates that a speed at which the training apparatus 4 generates to-be-transmitted data obtained by performing forward calculation is far quicker than a speed at which the training apparatus 4 transmits data to the training apparatus 3. Therefore, forward calculation on the model D may be suspended, and reverse gradient calculation is performed on the model D.

In addition, after forward calculation on the model D is completed, reverse gradient calculation may be performed on the model D based on the data in the queue 5, to facilitate subsequent update of the model D.

Step 907: Determine whether reverse gradient calculation is completed.

Step 908: Update a weight of the model D based on a plurality of gradients obtained through calculation.

If reverse gradient calculation is completed, the weight of the model D is updated based on the plurality of gradients obtained through calculation, to complete one time of iterative training of the model D. If reverse gradient calculation is not completed, continue to perform the foregoing step 903.

In conclusion, in the procedure shown in FIG. 9, because the calculation result obtained by performing forward calculation on the model D needs to be transmitted to the training apparatus 3, the training apparatus 4 preferentially performs forward calculation on the model D. Then, when a large amount of to-be-transmitted data is cached into the queue, forward calculation on the model D may be suspended, and reverse gradient calculation on the model D is performed, to alleviate memory pressure. Finally, after forward calculation on the model D is completed, reverse gradient calculation is performed on the model D, and the weight of the model D is updated based on a gradient obtained through calculation.

The foregoing describes in detail the method provided in embodiments of this application. The following describes a device that is provided in embodiments of this application and that is configured to perform the foregoing method.

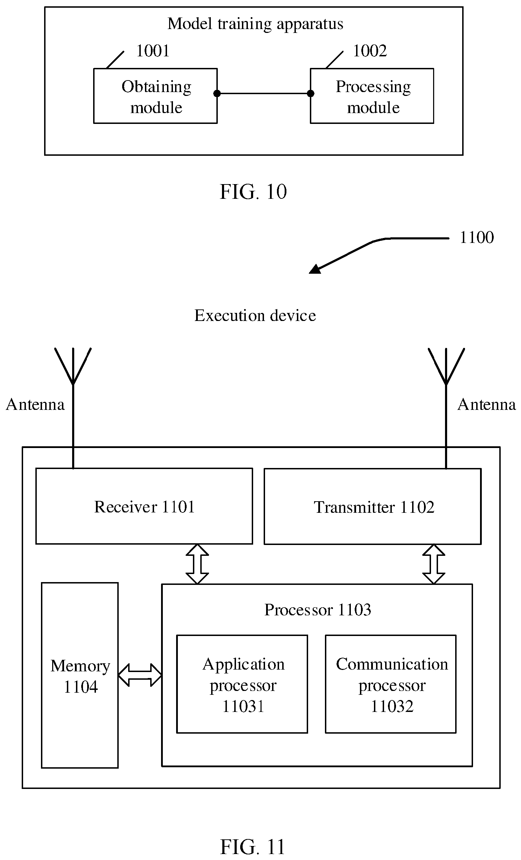

FIG. 10 is a diagram of a structure of a model training apparatus according to an embodiment of this application. As shown in FIG. 10, the model training apparatus provided in this embodiment of this application may be a first training apparatus. The apparatus includes: an obtaining module 1001, configured to obtain a training dataset, where the training dataset includes a plurality of pieces of data; and a processing module 1002, configured to divide the plurality of pieces of data into a plurality of groups of data, where each of the plurality of groups of data includes at least one piece of data, and a data amount of each group of data is related to a communication capability of the first training apparatus. The processing module 1002 is further configured to process the plurality of groups of data in batches by group based on a model deployed in the first training apparatus, to train the model and transmit data obtained by processing the plurality of groups of data to a second training apparatus in batches. The second training apparatus and the first training apparatus jointly participate in training of the model.

In a possible implementation, an operation executed in a process of training the model includes a first-type operation and a second-type operation, the first-type operation is used to generate, based on the plurality of groups of data, data to be transmitted to the second training apparatus, the second-type operation is used to generate data processed only by the first training apparatus, and an execution priority of the first-type operation is higher than an execution priority of the second-type operation.

In a possible implementation, the first-type operation includes a first-subtype operation and a second-subtype operation, an operation result of the first-subtype operation is used to obtain an input of the second-subtype operation, and an operation result of the second-subtype operation is used to be transmitted to the second training apparatus.

In a possible implementation, an execution priority of the second-subtype operation is higher than an execution priority of the first-subtype operation.

In a possible implementation, the processing module 1002 is further configured to:

cache, into a first queue, the data generated by executing the first-type operation, where the first queue is used to cache the data to be transmitted to the second training apparatus; and
when a data amount of the data in the first queue is greater than or equal to a first threshold, stop execution of the first-type operation, and execute the second-type operation.

In a possible implementation, the processing module 1002 is further configured to:
when the data in the first queue is less than the first threshold, or when data used to support execution of the second-type operation has been processed, stop executing the second-type operation, and continue to execute the first-type operation.

In a possible implementation, training in which the first training apparatus participates is federated learning.

In a possible implementation, the first-type operation includes an operation of processing the plurality of groups of data based on the model, and the second-type operation includes an operation of performing reverse gradient calculation on the model based on data obtained from the second training apparatus.

In a possible implementation, the model includes a first submodel and a second submodel.

The first-type operation includes an operation of processing the plurality of groups of data based on the first submodel, and an operation of processing the second submodel based on data obtained from the second training apparatus.

The second-type operation includes an operation of performing reverse gradient calculation on the first submodel.

In a possible implementation, a quantity of the plurality of pieces of data is related to a batch size of the model.

In the process of training the model, a target gradient is related to a plurality of gradients obtained based on the plurality of groups of data, and the target gradient is used by the first training apparatus to update the model.

In a possible implementation, the quantity of the plurality of pieces of data is related to the batch size of the model, a quantity of groups of the plurality of groups of data is in a positive correlation with a to-be-transmitted data amount, and the quantity of groups of the plurality of groups of data is in a negative correlation with the communication capability and training duration of the first training apparatus.

The to-be-transmitted data amount is a data amount of to-be-transmitted data generated after the plurality of groups of data are processed, and the training duration is duration for training the model by the first training apparatus based on the plurality of groups of data.

FIG. 11 is a diagram of a structure of an execution device according to an embodiment of this application. The execution device 1100 may be specifically represented as a mobile phone, a tablet computer, a notebook computer, an intelligent wearable device, a server, or the like. This is not limited herein. Specifically, the execution device 1100 includes a receiver 1101, a transmitter 1102, a processor 1103, and a memory 1104 (there may be one or more processors 1103 in the execution device 1100, and one processor is used as an example in FIG. 11). The processor 1103 may include an application processor 11031 and a communication processor 11032. In some embodiments of this application, the receiver 1101, the transmitter 1102, the processor 1103, and the memory 1104 may be connected through a bus or in another manner.

The memory 1104 may include a read-only memory and a random access memory, and provide instructions and data to the processor 1103. A part of the memory 1104 may further include a non-volatile random access memory (non-volatile random access memory, NVRAM). The memory 1104 stores a processor and operation instructions, an executable module, a data structure, a subset thereof, or an extension set thereof. The operation instructions may include various operation instructions for implementing various operations.

The processor 1103 controls an operation of the execution device. During specific application, components of the execution device are coupled together through a bus system. In addition to a data bus, the bus system may further include a power bus, a control bus, a status signal bus, and the like. However, for clear description, various types of buses in the figure are referred to as the bus system.

The method disclosed in the foregoing embodiment of this application may be applied to the processor 1103, or implemented by the processor 1103. The processor 1103 may be an integrated circuit chip, and has a signal processing capability. In an implementation process, the steps in the foregoing method can be performed by using a hardware integrated logic circuit in the processor 1103, or by using instructions in a form of software. The processor 1103 may be a general-purpose processor, a digital signal processor (digital signal processor, DSP), a microprocessor, or a microcontroller; or may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1103 may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1104, and the processor 1103 reads information in the memory 1104 and completes the steps in the foregoing methods in combination with hardware of the processor.

The receiver 1101 may be configured to: receive input digit or character information, and generate a signal input related to a related setting and function control of the execution device. The transmitter 1102 may be configured to output the digital or character information through a first interface. The transmitter 1102 may be further configured to send instructions to a disk group through the first interface, to modify data in the disk group. The transmitter 1102 may further include a display device such as a display.

The electronic device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the execution device performs the model hyperparameter selection method described in embodiments, or a chip in a training device performs the model hyperparameter selection method described in embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

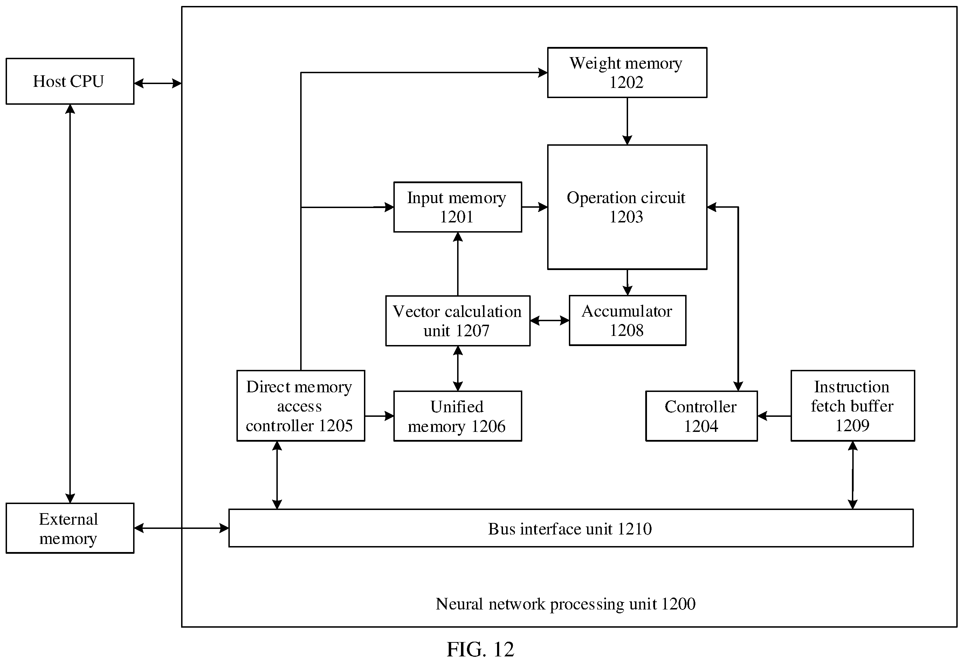

Specifically, FIG. 12 is a diagram of a structure of a chip according to an embodiment of this application. The chip may be represented as a neural network processing unit NPU 1200. The NPU 1200 is mounted to a host CPU (Host CPU) as a coprocessor, and the host CPU allocates a task. A core part of the NPU is an operation circuit 1203, and a controller 1204 controls the operation circuit 1203 to extract matrix data in a memory and perform a multiplication operation.

In some implementations, the operation circuit 1203 includes a plurality of processing units (Process Engines, PEs) inside. In some implementations, the operation circuit 1203 is a two-dimensional systolic array. The operation circuit 1203 may alternatively be a one-dimensional systolic array or another electronic circuit capable of performing mathematical operations such as multiplication and addition. In some implementations, the operation circuit 1203 is a general-purpose matrix processor.

For example, it is assumed that there is an input matrix A, a weight matrix B, and an output matrix C. The operation circuit fetches, from a weight memory 1202, data corresponding to the matrix B, and caches the data on each PE in the operation circuit. The operation circuit fetches data of the matrix A from an input memory 1201, to perform a matrix operation with the matrix B, and stores an obtained partial result or an obtained final result of the matrix in an accumulator (accumulator) 1208.

A unified memory 1206 is configured to store input data and output data. Weight data is directly transferred to the weight memory 1202 by using a direct memory access controller DMAC (Direct Memory Access Controller, DMAC) 1205. The input data is also transferred to the unified memory 1206 by using the DMAC.

A BIU is the abbreviation of a Bus Interface Unit, namely, a bus interface unit 1210, and is configured to perform interaction between an AXI bus and the DMAC as well as an instruction fetch buffer (Instruction Fetch Buffer, IFB) 1209.

The bus interface unit (Bus Interface Unit, BIU) 1210 is used by the instruction fetch buffer 1209 to obtain instructions from an external memory, and is further used by the direct memory access controller 1205 to obtain original data of the input matrix A or the weight matrix B from the external memory.

The DMAC is mainly configured to transfer input data in the external memory DDR to the unified memory 1206, transfer weight data to the weight memory 1202, or transfer input data to the input memory 1201.

A vector calculation unit 1207 includes a plurality of operation processing units. If required, further processing is performed on an output of the operation circuit 1203, for example, vector multiplication, vector addition, an exponential operation, a logarithmic operation, or size comparison. The vector calculation unit 1207 is mainly used for non-convolutional/fully-connected layer network computation in a neural network, such as batch normalization (batch normalization), pixel-level summation, and upsampling of a feature map.

In some implementations, the vector calculation unit 1207 can store a processed output vector in the unified memory 1206. For example, the vector calculation unit 1207 may apply a linear function or a non-linear function to the output of the operation circuit 1203, for example, perform linear interpolation on a feature map extracted at a convolutional layer. For another example, the linear function or the non-linear function is applied to a vector of an accumulated value to generate an activation value. In some implementations, the vector calculation unit 1207 generates a normalized value, a pixel-level summation value, or both. In some implementations, the processed output vector can be used as an activation input of the operation circuit 1203, for example, to be used in a subsequent layer in the neural network.

The instruction fetch buffer (instruction fetch buffer) 1209 connected to the controller 1204 is configured to store instructions used by the controller 1204.

The unified memory 1206, the input memory 1201, the weight memory 1202, and the instruction fetch buffer 1209 are all on-chip memories. The external memory is private to a hardware architecture of the NPU.

Any one of the processors mentioned above may be a general-purpose central processing unit, a microprocessor, an ASIC, or one or more integrated circuits for controlling program execution.

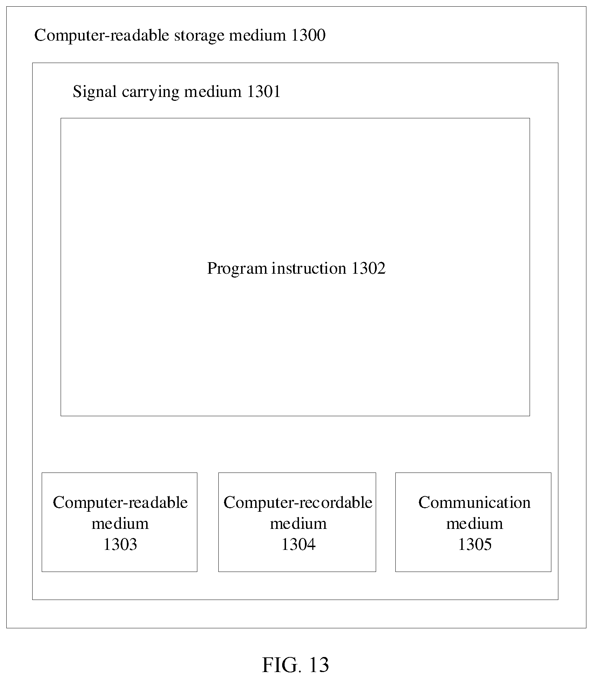

FIG. 13 is a diagram of a structure of a computer-readable storage medium according to an embodiment of this application. This application further provides a computer-readable storage medium. In some embodiments, the method disclosed in FIG. 3 may be implemented as computer program instructions encoded in a machine-readable format on the computer-readable storage medium or encoded in another non-transitory medium or product.

FIG. 13 schematically shows a conceptual partial view of an example computer-readable storage medium arranged according to at least some embodiments shown herein, and the example computer-readable storage medium includes a computer program for executing a computer process on a computing device.

In an embodiment, the computer-readable storage medium 1300 is provided by using a signal carrying medium 1301. The signal carrying medium 1301 may include one or more program instructions 1302 that may provide the foregoing functions or some functions described in FIG. 5 when being run by one or more processors.

In some examples, the signal carrying medium 1301 may include a computer-readable medium 1303, for example, but not limited to, a hard disk drive, a compact disc (CD), a digital video disc (DVD), a digital tape, a memory, a ROM, or a RAM.

In some implementations, the signal carrying medium 1301 may include a computer-recordable medium 1304, for example, but not limited to, a memory, a read/write (R/W) CD, or an R/W DVD. In some implementations, the signal carrying medium 1301 may include a communication medium 1305, for example, but not limited to, a digital and/or analog communication medium (for example, an optical fiber cable, a waveguide, a wired communication link, or a wireless communication link). Therefore, for example, the signal carrying medium 1301 may be conveyed by a wireless communication medium 1305 (for example, a wireless communication medium that complies with the IEEE 802.11 standard or another transmission protocol).

The one or more program instructions 1302 may be, for example, computer-executable instructions or logic implementation instructions. In some examples, the computing device may be configured to provide various operations, functions, or actions in response to the program instruction 1302 transmitted to the computing device by using one or more of the computer-readable medium 1303, the computer-recordable medium 1304, and/or the communication medium 1305.

In addition, it should be noted that the apparatus embodiments described above are merely examples. Units described as separate parts may or may not be physically separate, and parts displayed as units may or may not be physical units, to be specific, may be located at one position or may be distributed on a plurality of network units. Some or all of the modules may be selected according to actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by the computer, or a data storage device, such as a training device or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (Solid State Disk, SSD)), or the like.

**Claims**

1.  A model training method, applied to a first training apparatus, wherein the method further comprises:

    obtaining a training dataset, wherein the training dataset comprises a plurality of pieces of data;
    dividing the plurality of pieces of data into a plurality of groups of data, wherein each of the plurality of groups of data comprises at least one piece of data, and a data amount of each group of data is related to a communication capability of the first training apparatus; and
    processing the plurality of groups of data in batches by group based on a model deployed in the first training apparatus, to train the model and transmit data obtained by processing the plurality of groups of data to a second training apparatus in batches, wherein the second training apparatus and the first training apparatus jointly participate in training of the model.

2.  The method according to claim 1, wherein an operation executed in a process of training the model comprises a first-type operation and a second-type operation, the first-type operation is used to generate, based on the plurality of groups of data, data to be transmitted to the second training apparatus, the second-type operation is used to generate data processed only by the first training apparatus, and an execution priority of the first-type operation is higher than an execution priority of the second-type operation.

3.  The method according to claim 2, wherein the first-type operation comprises a first-subtype operation and a second-subtype operation, an operation result of the first-subtype operation is used to obtain an input of the second-subtype operation, and an operation result of the second-subtype operation is used to be transmitted to the second training apparatus.

4.  The method according to claim 3, wherein an execution priority of the second-subtype operation is higher than an execution priority of the first-subtype operation.

5.  The method according to any one of claims 1 to 4, wherein in the process of training the model, the method further comprises:

    caching, into a first queue, the data generated by executing the first-type operation, wherein the first queue is used to cache the data to be transmitted to the second training apparatus; and
    when a data amount of the data in the first queue is greater than or equal to a first threshold, stopping execution of the first-type operation, and executing the second-type operation.

6. The method according to claim 5, wherein the method further comprises:
when the data in the first queue is less than the first threshold, or when data used to support execution of the second-type operation has been processed, stopping executing the second-type operation, and continuing to execute the first-type operation.

7. The method according to any one of claims 1 to 6, wherein training in which the first training apparatus participates is federated learning.

8. The method according to any one of claims 1 to 7, wherein the first-type operation comprises an operation of processing the plurality of groups of data based on the model, and the second-type operation comprises an operation of performing reverse gradient calculation on the model based on data obtained from the second training apparatus.

9. The method according to any one of claims 1 to 7, wherein the model comprises a first submodel and a second submodel;

   the first-type operation comprises an operation of processing the plurality of groups of data based on the first submodel, and an operation of processing the second submodel based on data obtained from the second training apparatus; and
   the second-type operation comprises an operation of performing reverse gradient calculation on the first submodel.

10. The method according to any one of claims 1 to 9, wherein a quantity of the plurality of pieces of data is related to a batch size of the model; and
in the process of training the model, a target gradient is related to a plurality of gradients obtained based on the plurality of groups of data, and the target gradient is used by the first training apparatus to update the model.

11. The method according to any one of claims 1 to 10, wherein the quantity of the plurality of pieces of data is related to the batch size of the model, a quantity of groups of the plurality of groups of data is in a positive correlation with a to-be-transmitted data amount, and the quantity of groups of the plurality of groups of data is in a negative correlation with the communication capability and training duration of the first training apparatus, wherein
the to-be-transmitted data amount is a data amount of to-be-transmitted data generated after the plurality of groups of data are processed, and the training duration is duration for training the model by the first training apparatus based on the plurality of groups of data.

12. A model training apparatus, wherein the model training apparatus is a first training apparatus, and comprises:

   an obtaining module, configured to obtain a training dataset, wherein the training dataset comprises a plurality of pieces of data; and
   a processing module, configured to divide the plurality of pieces of data into a plurality of groups of data, wherein each of the plurality of groups of data comprises at least one piece of data, and a data amount of each group of data is related to a communication capability of the first training apparatus; and
   the processing module is further configured to process the plurality of groups of data in batches by group based on a model deployed in the first training apparatus, to train the model and transmit data obtained by processing the plurality of groups of data to a second training apparatus in batches, wherein the second training apparatus and the first training apparatus jointly participate in training of the model.

13. The apparatus according to claim 12, wherein an operation executed in a process of training the model comprises a first-type operation and a second-type operation, the first-type operation is used to generate, based on the plurality of groups of data, data to be transmitted to the second training apparatus, the second-type operation is used to generate data processed only by the first training apparatus, and an execution priority of the first-type operation is higher than an execution priority of the second-type operation.

14. The apparatus according to claim 13, wherein the first-type operation comprises a first-subtype operation and a second-subtype operation, an operation result of the first-subtype operation is used to obtain an input of the second-subtype operation, and an operation result of the second-subtype operation is used to be transmitted to the second training apparatus.

15. The apparatus according to claim 14, wherein an execution priority of the second-subtype operation is higher than an execution priority of the first-subtype operation.

16. The apparatus according to any one of claims 12 to 15, wherein the processing module is further configured to:

cache, into a first queue, the data generated by executing the first-type operation, wherein the first queue is used to cache the data to be transmitted to the second training apparatus; and
when a data amount of the data in the first queue is greater than or equal to a first threshold, stop execution of the first-type operation, and execute the second-type operation.

17. The apparatus according to claim 16, wherein the processing module is further configured to:
when the data in the first queue is less than the first threshold, or when data used to support execution of the second-type operation has been processed, stop executing the second-type operation, and continue to execute the first-type operation.

18. The apparatus according to any one of claims 12 to 17, wherein training in which the first training apparatus participates is federated learning.

19. The apparatus according to any one of claims 12 to 18, wherein the first-type operation comprises an operation of processing the plurality of groups of data based on the model, and the second-type operation comprises an operation of performing reverse gradient calculation on the model based on data obtained from the second training apparatus.

20. The apparatus according to any one of claims 12 to 18, wherein the model comprises a first submodel and a second submodel;

the first-type operation comprises an operation of processing the plurality of groups of data based on the first submodel, and an operation of processing the second submodel based on data obtained from the second training apparatus; and
the second-type operation comprises an operation of performing reverse gradient calculation on the first submodel.

21. The apparatus according to any one of claims 12 to 20, wherein a quantity of the plurality of pieces of data is related to a batch size of the model; and
in the process of training the model, a target gradient is related to a plurality of gradients obtained based on the plurality of groups of data, and the target gradient is used by the first training apparatus to update the model.

22. The apparatus according to any one of claims 12 to 21, wherein the quantity of the plurality of pieces of data is related to the batch size of the model, a quantity of groups of the plurality of groups of data is in a positive correlation with a to-be-transmitted data amount, and the quantity of groups of the plurality of groups of data is in a negative correlation with the communication capability and training duration of the first training apparatus, wherein
the to-be-transmitted data amount is a data amount of to-be-transmitted data generated after the plurality of groups of data are processed, and the training duration is duration for training the model by the first training apparatus based on the plurality of groups of data.

23. A model training apparatus, comprising a memory and a processor, wherein the memory stores code, and the processor is configured to execute the code; and when the code is executed, the apparatus performs the method according to any one of claims 1 to 11.

24. A model training system, comprising at least two model training apparatuses, wherein the at least two model training apparatuses jointly participate in model training, and any one of the at least two model training apparatuses interacts with another model training apparatus and performs model training by using the method according to any one of claims 1 to 11.

25. A computer storage medium, wherein the computer storage medium stores instructions; and when the instructions are executed by a computer, the computer is enabled to implement the method according to any one of claims 1 to 11.

26. A computer program product, wherein the computer program product stores instructions; and when the instructions are executed by a computer, the computer is enabled to implement the method according to any one of claims 1 to 11.

FIG. 1

FIG. 2

EP 4 614 407 A1

Obtain a training dataset, where the training dataset includes a plurality of pieces of data | 301

Divide the plurality of pieces of data into a plurality of groups of data, where each of the plurality of groups of data includes at least one piece of data, and a quantity of groups of the plurality of groups of data is related to a communication capability of a first training apparatus | 302

Process the plurality of groups of data in batches by group based on a model deployed in the first training apparatus, to train the model and transmit data obtained by processing the plurality of groups of data to a second training apparatus in batches, where the second training apparatus and the first training apparatus jointly participate in training of the model | 303

FIG. 3

FIG. 4A

Training
apparatus 2

| Calculation B | Data B transmission |

Training
apparatus 1

| Calculation A | Data A transmission | | Calculation C | Model update |

Data is not grouped

Training
apparatus 2

| Calculation B1 | Data B1 transmission | Data B2 transmission |
| | Calculation B2 | |

Training
apparatus 1

| Calculation A1 | Data A1 transmission | Data A2 transmission | | Calculation C1 | | Calculation C2 | Model update |
| | Calculation A2 | | | | | | |

Reduce duration

Data is grouped

FIG. 4B

FIG. 5

Model C1

Data input

Training apparatus 3

Forward calculation

Reverse gradient calculation

Model D

Data input

Forward calculation

Reverse gradient calculation

Training apparatus 4

Gradient data

Calculation result 4

Calculation result 3

Gradient data

Training apparatus 3

Forward calculation

Reverse gradient calculation

Model C2

FIG. 6

EP 4 614 407 A1

FIG. 7

Training apparatus 3

Divide data of one batch into a plurality of groups of data — 801

A group number is 1 — 802

Add 1 to a group number — 806

Is a queue 1 empty? — 803

Yes | No

Is forward calculation on a model C1 completed? — 804

Dequeue data in the queue 1 and data in a queue 2 — 809

Perform forward calculation and reverse gradient calculation on a model C2, and cache a calculation result into a queue 3 — 810

No | Yes

Perform forward calculation on the model C1, and cache a calculation result into a queue 2 — 805

Is a queue 3 empty? — 807

No

Yes

Perform reverse gradient calculation on the model C1 — 808

Queue 1: Cache data transmitted by a training apparatus 4

Queue 2: Cache the calculation result obtained by performing forward calculation on the model C1

Queue 3: Cache the calculation result obtained by performing reverse gradient calculation on the model C2

FIG. 8

Training apparatus 4

Divide data of one batch into N groups of data 901

A group number is 1 902

Is a data amount in a queue 4 greater than a first threshold, or is forward calculation is completed? 903

No

Add 1 to a group number 905

Perform forward calculation on a model D, and cache a calculation result into the queue 4, to transmit the calculation result to a training apparatus 3 904

Yes

Perform reverse gradient calculation on a model D based on data in a queue 5 906

Is reverse gradient calculation completed? 907

No

Yes

Update a weight of the model D 908

Queue 4: Cache the calculation result obtained by performing forward calculation on the model D

Queue 5: Cache data transmitted by the training apparatus 3

FIG. 9

Model training apparatus

1001 Obtaining module

1002 Processing module

FIG. 10

1100

Execution device

Antenna

Antenna

Receiver 1101

Transmitter 1102

Processor 1103

Memory 1104

Application processor 11031

Communication processor 11032

FIG. 11

EP 4 614 407 A1

FIG. 12

Computer-readable storage medium 1300

Signal carrying medium 1301

Program instruction 1302

| Computer-readable medium 1303 | Computer-recordable medium 1304 | Communication medium 1305 |

FIG. 13

## INTERNATIONAL SEARCH REPORT

| International application No. |
| --- |
| **PCT/CN2023/129042** |

| A. | CLASSIFICATION OF SUBJECT MATTER |
| --- | --- |

G06N 20/20(2019.01)i; G06N3/08(2023.01)i

According to International Patent Classification (IPC) or to both national classification and IPC

| B. | FIELDS SEARCHED |
| --- | --- |

Minimum documentation searched (classification system followed by classification symbols)

IPC:G06N,G06K,G06F,H04L

Documentation searched other than minimum documentation to the extent that such documents are included in the fields searched

Electronic data base consulted during the international search (name of data base and, where practicable, search terms used)

CNTXT; ENTXT; CNABS; WPABS; CJFD; DWPI; CNKI; IEEE; 3GPP: 模型, 训练, 传输, 数据, 运算, 优先, model?, train +, transmiss+, data, operat+, priority

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2020389545 A1 (SIEMENS HEALTHCARE GMBH) 10 December 2020 (2020-12-10) description, paragraphs 14-72 | 1, 7, 10-12, 18, 21-26 |
| X | US 2017308789 A1 (MICROSOFT TECHNOLOGY LICENSING, LLC) 26 October 2017 (2017-10-26) description, paragraphs 13-150 | 1, 7, 10-12, 18, 21-26 |
| A | CN 111931950 A (ALIPAY (HANGZHOU) INFORMATION TECHNOLOGY CO., LTD.) 13 November 2020 (2020-11-13) entire document | 1-26 |
| A | CN 114861217 A (ALIPAY (HANGZHOU) INFORMATION TECHNOLOGY CO., LTD.) 05 August 2022 (2022-08-05) entire document | 1-26 |
| A | CN 114897067 A (BEIJING BAIDU NETCOM SCIENCE AND TECHNOLOGY CO., LTD.) 12 August 2022 (2022-08-12) entire document | 1-26 |
| A | WO 2022105714 A1 (HUAWEI TECHNOLOGIES CO., LTD.) 27 May 2022 (2022-05-27) entire document | 1-26 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 December 2023** | **20 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/129042**

| Patent document cited in search report | | | Publication date (day/month/year) | Patent family member(s) | | | Publication date (day/month/year) |
|---|---|---|---|---|---|---|---|
| US | 2020389545 | A1 | 10 December 2020 | EP | 3748643 | A1 | 09 December 2020 |
| US | 2017308789 | A1 | 26 October 2017 | EP | 3192016 | A1 | 19 July 2017 |
| | | | | EP | 3192016 | A4 | 20 September 2017 |
| | | | | EP | 3192016 | B1 | 08 May 2019 |
| | | | | US | 11049006 | B2 | 29 June 2021 |
| | | | | WO | 2016037351 | A1 | 17 March 2016 |
| | | | | ES | 2738319 | T3 | 21 January 2020 |
| | | | | CN | 106062786 | A | 26 October 2016 |
| | | | | CN | 106062786 | B | 31 December 2019 |
| | | | | CN | 110992935 | A | 10 April 2020 |
| CN | 111931950 | A | 13 November 2020 | CN | 111931950 | B | 26 January 2021 |
| CN | 114861217 | A | 05 August 2022 | None | | | |
| CN | 114897067 | A | 12 August 2022 | None | | | |
| WO | 2022105714 | A1 | 27 May 2022 | CN | 114611705 | A | 10 June 2022 |

Form PCT/ISA/210 (patent family annex) (July 2022)

**EP 4 614 407 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211372502